(19) Europäisches Patentamt
European Patent Office
Office européen des brevets

(11) EP 1 345 970 B1

(12) FASCICULE DE BREVET EUROPEEN

(45) Date de publication et mention de la délivrance du brevet:
**16.04.2008 Bulletin 2008/16**

(21) Numéro de dépôt: **01995748.9**

(22) Date de dépôt: **20.12.2001**

(51) Int Cl.:
*C08B 37/00* (2006.01) *C08B 37/14* (2006.01)
*D06M 15/03* (2006.01) *C11D 1/88* (2006.01)
*C11D 3/22* (2006.01)

(86) Numéro de dépôt international:
**PCT/FR2001/004110**

(87) Numéro de publication internationale:
**WO 2002/053600 (11.07.2002 Gazette 2002/28)**

# (54) UTILISATION DE POLYSACCHARIDE AMPHOTERE POUR LE SOIN DES ARTICLES EN FIBRES TEXTILES

VERWENDUNG VON AMPHOTEREN POLYSACCHARIDEN ZUR BEHANDLUNG VON GEGENSTÄNDEN AUS TEXTILFASERN

USE OF AMPHOTERIC POLYSACCHARIDE FOR TREATING TEXTILE FIBRE ARTICLES

(84) Etats contractants désignés:
**AT BE CH CY DE DK ES FI FR GB GR IE IT LI LU MC NL PT SE TR**

(30) Priorité: **28.12.2000 FR 0017219**

(43) Date de publication de la demande:
**24.09.2003 Bulletin 2003/39**

(73) Titulaire: **RHODIA CHIMIE**
**92512 Boulogne-Billancourt (FR)**

(72) Inventeurs:
- **AUBAY, Eric**
  **F-94170 LE PERREUX-sur-MARNE (FR)**
- **FLEURY, Etienne**
  **F-69540 IRIGNY (FR)**
- **HARRISON, Ian**
  **F-78300 POISSY (FR)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:
**EP-A- 0 071 148** **EP-A- 0 093 601**
**EP-A- 0 943 627** **WO-A-98/18828**
**DE-A- 2 925 859** **US-A- 3 467 647**
**US-A- 4 276 414**

- **PATENT ABSTRACTS OF JAPAN vol. 015, no. 048 (C-0802), 5 février 1991 (1991-02-05) & JP 02 277881 A (NIPPON PETROCHEM CO LTD), 14 novembre 1990 (1990-11-14)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet l'utilisation, dans une composition pour le soin en milieu aqueux ou humide, des articles en fibres textiles à base de coton notamment, colorés en particulier, d'un polysaccharide amphotère comme agent permettant d'éviter la dégradation desdits articles et/ou permettant de protéger les couleurs desdits articles et/ou apportant des propriétés d'antifroissage et/ou d'adoucissage auxdits articles.

On entend par soin des articles en fibres textiles, du linge en particulier, la protection de ces derniers vis-à-vis de phénomènes de dégradation physique ou chimique, notamment la protection des couleurs des articles colorés, et/ou l'apport à ceux-ci de bénéfices comme des propriétés d'adoucissage et/ou d'antifroissage.

Le nettoyage du linge en machine conduit à une dégradation physique et chimique des fibres et tout particulièrement des fibres de coton. L'alcalinité délivrée par les détergents ainsi que certains composés spécifiques comme les substances oxydantes (perborate, percarbonate) ou certains enzymes peuvent être à l'origine de la dégradation chimique des fibres de coton. Mais c'est généralement la conjonction des actions chimiques et mécaniques qui conduit à une dégradation des fibres. L'action mécanique est produite lors du lavage, du rinçage, de l'essorage ou du séchage, lorsque ce dernier a lieu dans un sèche-linge. Cette dégradation des fibres conduit à la formation de fibrilles à la surface du textile qui donnent finalement une perte d'éclat des textiles colorés. Cette dégradation induit également une diminution de la résistance du textile qui a l'extrême peut conduire à un déchirement des tissus. Cette dégradation des textiles peut être évaluée quantitativement soit par une perte des couleurs des textiles colorés ou par une diminution de l'énergie de rupture du textile. Il est en général nécessaire d'effectuer de 10 à 20 lavages cumulés en machine pour percevoir ce type de dégradation.

Le nettoyage en machine lave linge qui comporte systématique une opération d'essorage conduit également à un linge froissé qui est accentué lors du séchage, notamment par la formation de liaisons hydrogènes inter-fibres. Une opération de repassage est donc nécessaire pour obtenir un aspect présentable du linge.

Afin de réduire la dégradation des fibres lors du lavage ou du rinçage, les fournisseurs de produits chimiques ou de détergents ont eu recours à des modifications de formules détergentes ou à l'utilisation de certains additifs spécifiques. On peut citer en particulier des détergents ne comprenant pas de système oxydant, mais qui présentent des capacités de nettoyage diminuées.

Des composés à base de silicone ont également été utilisés et en particulier des silicones aminés (US-A-4,585,563 ; WO 92/07927 ; WO 98/39401).

La demanderesse a trouvé que l'utilisation, dans des compositions pour le traitement en milieu aqueux ou humide des articles en fibres textiles notamment à base de coton, colorés en particulier, de certains polysaccharides amphotères solubles dans les conditions d'usage ("working conditions") desdites compositions, permettait d'éviter la dégradation de ces articles, permettait de protéger les couleurs et/ou apportait à ceux-ci des propriétés d'antifroissage et/ou d'adoucissage.

De telles compositions peuvent être notamment des compositions pour le lavage et/ou le rinçage et/ou l'adoucissage du linge, pour le détachage du linge avant lavage ("prespotting"), pour le séchage du linge humide en sèche-linge ou pour le repassage du linge.

Un premier objet de l'invention consiste en l'utilisation, dans une composition pour le traitement des articles en fibres textiles en milieu aqueux ou humide, d'au moins un polysaccharide amphotère, dont le squelette natif est un polysaccharide formé

* d'une chaîne principale comprenant des unités anhydrohexoses semblables ou différentes
* et de ramifications comprenant au moins une unité anhydropentose et/ou anhydrohexose neutre ou anionique,

les unités anhydrohexoses et/ou anhydropentoses dudit polysaccharide amphotère étant substituées ou modifiées par un ou des groupes porteur(s) d'au moins une charge anionique ou potentiellement anionique et/ou d'au moins une charge cationique ou potentiellement cationique,

le degré de substitution ou de modification DSi des unités anhydrohexoses et/ou anhydropentoses par l'ensemble desdits groupes porteurs de charges ioniques ou potentiellement ioniques allant de 0,01 à moins de 3, de préférence de 0,05 à 2,5, avec un rapport du nombre de charges anioniques ou potentiellement anioniques au nombre de charges cationiques ou potentiellement cationiques allant de 99,5/0,5 à 30/70, de préférence de 99,5/0,5 à 50/50,

comme agent permettant d'éviter la dégradation desdits articles et/ou permettant de protéger les couleurs desdits articles et/ou apportant des propriétés d'antifroissage et/ou d'adoucissage auxdits articles.

La masse molaire en poids desdits polysaccharides amphotères peut aller de 2000 à 3 000 000, de préférence de 10 000 à 2 000 000, tout particulièrement de 10 000 à 500 000.

La masse molaire en poids Mw desdits polysaccharides amphotères peut être mesurée par chromatographie par exclusion de taille. La mesure est effectuée dans une solution aqueuse à 0.1 M en acide formique contenant 0.05 M de nitrate de sodium et 10 ppm de chlorure de Polyallyldiméthylamine de haute masse molaire (PDADMA) dans le cas des

polysaccharides dont le DSi en fonction ionique ou potentiellement ionique est inférieur à 0.5. Pour ceux dont le DSi est supérieur à 0.5, on utilise une solution aqueuse à 0.025 M en acide chlorhydrique.

La masse molaire en poids Mw est établie de manière connue directement par l'intermédiaire des valeurs de diffusion de la lumière.

Le degré de substitution ou de modification DSi correspond au nombre moyen de fonctions hydroxyles des unités anhydrohexoses et/ou anhydropentoses substituées ou modifiées par ledit ou lesdits groupes ioniques ou potentiellement ioniques, par unité anhydrohexose et/ou anhydropentose.

Lesdits groupes ioniques ou potentiellement ioniques sont liés aux atomes de carbone du squelette sucre soit directement soit par l'intermédiaire de liaisons -O-.

Selon l'invention, les charges anioniques ou potentiellement anioniques peuvent être apportées par des groupes substituants ou modifiants différents de ceux porteurs de charges cationiques ou potentiellement cationiques ; ledit polymère est alors un polysaccharide ampholyte.

Egalement selon l'invention, un même groupe substituant ou modifiant peut être porteur à la fois d'une charge anionique ou potentiellement anionique et d'une charge cationique ou potentiellement cationique ; ledit polysaccharide est alors de type bétaine.

Selon une variante de réalisation de l'invention, ledit polysaccharide amphotère peut présenter en outre au moins un groupe non-ionique.

Lesdits groupes non-ioniques sont liés aux atomes de carbone du squelette sucre soit directement soit par l'intermédiaire de liaisons -O-.

La présence de tels groupes est exprimée en nombre de moles de substitution MS, c'est-à-dire en nombre moyen de moles de précurseur dudit substituant non-ionique ayant réagi par unité anhydrohexose et/ou anhydropentose.

Si ledit précurseur n'est pas apte à former de nouveaux groupes hydroxyles réactifs (précurseur d'alkylation par exemple), le degré de substitution ou de modification par l'ensemble des groupes ioniques ou ionisables et non-ioniques est inférieur à 3 par définition.

Si ledit précurseur est susceptible de former de nouveaux groupes hydroxyles réactifs (précurseur d'hydroxyalkylation par exemple), le nombre de moles de subsitution MS n'est théoriquement pas limité ; il peut par exemple aller jusqu'à 6, de préférence jusqu'à 2.

Parmi les groupes anioniques ou potentiellement anioniques on peut mentionner ceux contenant une ou plusieurs fonctions carboxylate (carboxylique), sulfonate (sulfonique), sulfate (sulfate acide), phosphate (phosphate acide), phosphonate (phosphonate acide) ...

On peut mentionner en particulier ceux de formule

$-[-CH_2-CH(R)-O]_x-(CH_2)_y-COOH$ ou

$-[-CH_2-CH(R)-O]_x-(CH_2)_y-COOM$

où

R est un atome d'hydrogène ou un radical alkyle contenant de 1 à 4 atomes de carbone

x est un nombre entier allant de 0 à 5

y est un nombre entier allant de 0 à 5

M représente un métal alcalin

On peut citer tout particulièrement les groupements carboxy $-COO^-Na^+$ lié directement à un atome de carbone du squelette sucre, carboxy méthyle (sel de sodium) $-CH_2-COO^-Na^+$ lié à un atome de carbone du squelette sucre par l'intermédiaire d'une liaison -O-.

Parmi les groupes cationiques ou potentiellement cationiques on peut mentionner ceux contenant une ou plusieurs fonctions amino, ammonium, phosphonium, pyridinium ...

On peut mentionner en particulier les groupes cationiques ou potentiellement cationiques de formule

- $-NH_2$
- $-[-CH_2-CH(R)-O]_x-(CH_2)_y-COA-R'-N(R'')_2$
- $-[-CH_2-CH(R)-O]_x-(CH_2)_y-COA-R'-N^+(R''')_3\ X^-$
- $-[-CH_2-CH(R)-O]_x-(CH_2)_y-COA-R'-NH-R''''-N(R'')_2$
- $-[-CH_2-CH(R)-O]_x-R'-N(R'')_2$
- $-[-CH_2-CH(R)-O]_x-R'-N^+(R''')_3\ X^-$
- $-[-CH_2-CH(R)-O]_x-R'-NH-R''''-N(R'')_2$
- $-[-CH_2-CH(R)-O]_x-Y-R''$

  où

. R est un atome d'hydrogène ou un radical alkyle contenant de 1 à 4 atomes de carbone
. x est un nombre entier allant de 0 à 5
. y est un nombre entier allant de 0 à 5
. R' est un radical alkylène contenant de 1 à 12 atomes de carbone, portant éventuellement un ou plusieurs substituants OH
. les radicaux R", semblables ou différents, représentent un atome d'hydrogène, un radical alkyle contenant de 1 à 18 atomes de carbone
. les radicaux R"', semblables ou différents, représentent un radical alkyle contenant de 1 à 18 atomes de carbone
. R"" est un radical alkylène linéaire, ramifié ou cyclique contenant de 1 à 6 atomes de carbone
. A représente O ou NH
. Y est un groupement aliphatique hétérocyclique comprenant de 5 à 20 atomes de carbone et un hétéroatome d'azote
. X- est un contre-ion, de préférence halogénure (chlorure, bromure, iodure notamment),

ainsi que les groupes N-alkylpyridinium-yle dont le radical alkyle contient de 1 à 18 atomes de carbone, avec un contre-ion, de préférence halogénure (chlorure, bromure, iodure notamment).

Parmi les groupements cationiques ou potentiellement cationiques, on peut citer tout particulièrement :

- ceux de formule

$-NH_2$

$-CH_2-CONH-(CH_2)_2-N(CH_3)_2$

$-CH_2-COO-(CH_2)_2-NH-(CH_2)_2-N(CH_3)_2$

$-CH_2-CONH-(CH_2)_3-NH-(CH_2)_2-N(CH_3)_2$

$-CH_2-CONH-(CH_2)_2-NH-(CH_2)_2-N(CH_3)_2$

$-CH_2-CONH-(CH_2)_2-N^+(CH_3)_3\ Cl^-$

$-CH_2-CONH-(CH_2)_3-N^+(CH_3)_3\ Cl^-$

$-(CH_2)_2-N(CH_3)_2$

$-(CH_2)_2-NH-(CH_2)_2-N(CH_3)_2$

$-(CH_2)_2-N^+(CH_3)_3\ Cl^-$

2-hydroxypropyltriméthyl ammonium chlorure $-CH_2-CH(OH)-CH_2-N^+(CH_3)_3\ Cl^-$

- les groupements pyridinium-yle tels que N-méthyl pyridinium-yle, de formule

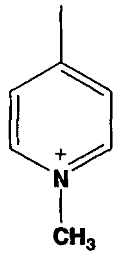

avec un contre-ion chlorure

- les groupements amino encombrés tels ceux dérivés d'amines HALS, de formule générale :

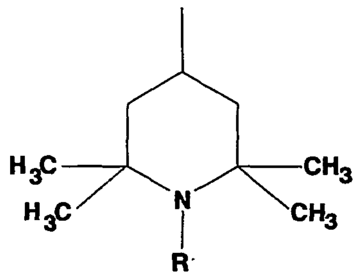

où R représente CH3 ou H.

Parmi les groupements bétaines, on peut citer tout particulièrement les fonctions de formule :

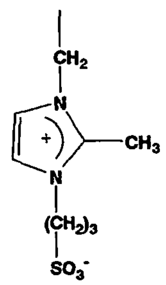

fonction 2-méthyl (3-sulfopropyl) imidazolium

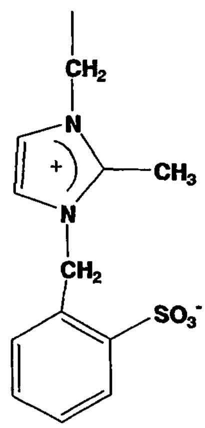

fonction (2-sulfobenzyl) imidazolium

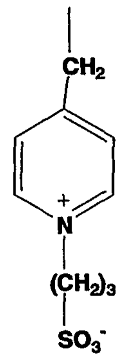

fonction (3-sulfopropyl) pyridinium
$-(CH_2)_2-N^+(CH_3)_2-(CH_2)_2-COO^-$ fonction éthyl-diméthylammonium bétaïne
$-(CH_2)_2-N^+(CH_3)_2-(CH_2)_3-SO_3^-$ fonction sulfo-propyl diméthylammonium

Parmi les groupements non-ioniques on peut mentionner ceux de formule :

- $-[-CH_2-CH(R)-O]_x-R^1$ où
  R est un atome d'hydrogène ou radical alkyle contenant de 1 à 4 atomes de carbone
  x est un nombre entier allant de 0 à 5
  $R^1$ représente

  . un atome d'hydrogène
  . un radical alkyle contenant de 1 à 22 atomes de carbone éventuellement interrompu par un ou plusieurs hétéroatome oxygène et/ou azote, cycloalkyle, aryle, arylalkyle, contenant de 6 à 12 atomes de carbone
  . un radical $-(CH_2)_y-COOR^2$
  . un radical $-(CH_2)_y-CN$
  . un radical $-(CH_2)_y-CONHR^2$

  $R^2$ représentant un radical alkyle, aryle ou arylalkyle contenant de 1 à 22 atomes de carbone,
  et y est un nombre entier allant de 0 à 5
- $-CO-NH-R^1$
  $R^1$ ayant la définition donnée ci-dessus,
  lié à un atome de carbone du squelette sucre par l'intermédiaire d'une liaison -O-

On peut citer tout particulièrement les groupements

. méthyle, éthyle, propyle, isopropyle, butyle, hexyle, octyle, dodécyle, octadécyle, phényle, benzyle, liés à un atome de carbone du squelette sucre par l'intermédiaire d'une liaison éther, ester, amide ou uréthane,
. cyanoéthyle, hydroxyéthyle, hydroxypropyle, hydroxybutyle, liés à un atome de carbone du squelette sucre par l'intermédiaire d'une liaison -O-.

Les unités hexoses (semblables ou différentes) de la chaîne principale du squelette natif peuvent être des unités D-glucose, D-ou L-galactose, D-mannose, D- ou L-fucose, L-rhamnose ...

Les unités pentoses et/ou hexoses (semblables ou différentes) neutres ou anioniques des ramifications du squelette natif peuvent être des unités D-xylose ..., L- ou D-arabinose, D-glucose, D-ou L-galactose, D-mannose, D- ou L-fucose, L-rhamnose ..., acide D-glucuronique,acide D-galacturonique, acide D-mannuronique ...

A titre d'exemples de squelette natif, on peut mentionner les galactomannanes, les galactoglucomannanes, les xyloglucanes, les gommes xanthanes, les scleroglucannes, les succinoglycanes, les rhamsans, les gommes welan ...

D'une manière préférentielle, le squelette natif est un galactomannane. Les galactomannanes sont des macromolécules comportant une chaîne principale d'unités D-mannopyranose liées en position $\beta$(1-4) substituée par des unités D-galactopyranose en position $\alpha$(1-6). Parmi ceux-ci, on peut mentionner les gommes de guar, de caroube, de tara. D'une manière toute préférentielle, le squelette natif est une gomme de guar. Les gommes de guar présentent un rapport mannose/galactose de 2.

Les polysaccharides amphotères utilisés selon l'invention peuvent être obtenus par fonctionnalisation du squelette natif à l'aide des précurseurs des groupes ioniques ou potentiellement ioniques et éventuellement non-ioniques.

Ces opérations de fonctionnalisation peuvent être réalisées de manière connue par oxydation, substitution, condensation, addition.

A titre d'exemples de polysaccharides amphotères pouvant être utilisés selon l'invention, on peut mentionner

- les carboxyméthyle chlorure d'hydroxypropyltriméthylammonium galactomannanes, en particulier les carboxyméthyle chlorure d'hydroxypropyltriméthylammonium guars,
- les carboxyméthyle hydroxypropyle chlorure d'hydroxypropyltriméthylammonium galactomannanes, en particulier les carboxyméthyle hydroxypropyle chlorure d'hydroxypropyltriméthylammonium guars.

Les groupes carboxyméthyles peuvent être introduits par exemple par carboxyméthylation par l'acide monochloracétique ; les groupes hydroxypropyltriméthylammonium peuvent être introduits par exemple par éthérification ou époxydation à l'aide de chlorure de 3-chloro 2-hydroxypropyl triméthylammonium ou de chlorure d'époxypropyl triméthylammonium ; des groupes carboxyméthyles peuvent être introduits d'une manière connue, par exemple par carboxyméthylation par de l'acide monochloracétique.

Un deuxième objet de l'invention consiste en un procédé pour améliorer les propriétés des compositions de traitement ou de soin des articles en fibres textiles en milieu aqueux ou humide, par addition auxdites compositions d'au moins un polysaccharide amphotère tel que décrit ci-dessus, comme agent permettant d'éviter la dégradation desdits articles et/ou permettant de protéger les couleurs desdits articles et/ou apportant des propriétés d'antifroissage et/ou d'adoucissage auxdits articles.

Ledit polysaccharide mis en oeuvre selon l'invention présente des charges ioniques ou ionisables au pH d'utilisation de ladite composition de traitement.

La forme de la composition et les conditions d'usage (ou de traitement) peuvent être multiples.
Ladite composition peut se présenter

* sous forme d'un solide (poudre, granulés, tablettes ...) ou d'une dispersion ou d'une solution aqueuse concentrée, mis en contact avec les articles à traiter, après dilution dans l'eau ;
* sous forme d'une dispersion ou d'une solution aqueuse concentrée préalablement déposée sur les articles secs à traiter avant dilution dans l'eau ;
* sous forme d'une dispersion ou d'une solution aqueuse à déposer directement sur les articles secs à traiter sans dilution ou d'un support solide (bâton) comprenant ledit polysaccharide amphotère, à appliquer directement sur les articles secs à traiter ;
* sous forme d'un support solide insoluble comprenant ledit polysaccharide amphotère mis en contact directement avec les articles à traiter à l'état humide.

Ainsi ladite composition peut être :

- une formulation détergente solide ou liquide susceptible de former directement par dilution un bain lessiviel ;
- une formulation rinçante et/ou adoucissante liquide susceptible de former directement par dilution un bain de rinçage et/ou d'adoucissage ;
- un matériau solide, textile notamment, comprenant ledit polysaccharide amphotère, destiné à être mis en contact avec les articles humides dans un sèche-linge (ledit matériau solide est appelé ci-après "additif de séchage") ;
- une formulation aqueuse de repassage ;
- un additif de lavage ("prespotter") destiné à être déposé sur les articles secs préalablement à une opération de lavage à l'aide d'une formulation détergente contenant ou ne contenant pas ledit polysaccharide amphotère (ledit additif est appelé ci-après "additif de lavage").

Ladite composition est particulièrement bien adaptée au soin du linge, notamment à base coton, en particulier contenant au moins 35% de coton. Elle est tout particulièrement adaptée au soin du linge coloré.

Les polysaccharides amphotères mis en oeuvre selon l'invention sont solubles dans les conditions d'usage ("working conditions") en milieu aqueux ou humide de ladite composition.
Lesdits polysaccharides amphotères sont considérés comme solubles lorsque plus de 50%, de préférence plus de 70% de leurs poids sont solubles dans le milieu aqueux ou humide d'utilisation de la composition de l'invention, c'est-à-dire notamment dans les conditions de température et de pH dudit milieu.

Le pH d'utilisation de ladite composition peut aller d'environ 2 à environ 12, selon l'usage recherché.
Lorsqu'il s'agit

- d'une formulation détergente, le pH du bain lessiviel est généralement de l'ordre 7 à 11, préférentiellement de 8 à 10,5 ;

- d'une formulation rinçante et/ou adoucissante, le pH du bain de rinçage et/ou d'adoucissage est généralement de l'ordre 2 à 8 ;
- d'un additif de séchage, le pH à considérer est celui de l'eau résiduelle, qui peut être de l'ordre 2 à 9 ;
- d'une formulation aqueuse de repassage, le pH de ladite formulation est généralement de l'ordre 5 à 9 ;
- d'un additif de lavage ("prespotter"), le pH à considérer est celui du pH du bain lessiviel de l'opération suivante de lavage, à savoir de l'ordre 7 à 11, préférentiellement de 8 à 10,5.

La quantité de polysaccharide amphotère mise en oeuvre selon l'invention peut aller de 0,05 à 10 % en sec du poids de ladite composition en sec, et ce en fonction de l'application recherchée.
Ainsi, ledit polysaccharide amphotère (PA) peut être mis en oeuvre comme suit :

| **% de (PA) (en sec)** | **dans une composition de soin utilisée comme** |
|---|---|
| 0,05 - 5<br>de préférence 0,1 - 3 | Formulation détergente |
| 0,05 - 3<br>de préférence 0,1 - 2 | formulation de rinçage et/ou adoucissage |
| 0,05 -10 | Additif de séchage |
| 0,05 -10<br>de préférence 0,1 - 5 | Formulation de repassage |
| 0,05 - 10<br>de préférence 0,1 - 5 | additif de lavage |

D'autres constituants peuvent être présents, à côté du polysaccharide amphotère, dans la composition de soin. Ladite composition peut contenir au moins un agent tensioactif et/ou un additif de détergence et/ou de rinçage et/ou d'adoucissage des articles en fibres textiles et/ou un support solide (textile notamment) dudit polysaccharide amphotère.
La nature de ces constituants est fonction de l'usage recherché de ladite composition.
Ainsi, lorsqu'il s'agit d'une formulation détergente, pour le lavage du linge, celle-ci comprend généralement :

- au moins un agent tensioactif naturel et/ou synthétique,
- au moins un adjuvant de détergence ("builder")
- éventuellement un agent ou un système oxydant,
- et une série d'additifs spécifiques.

La formulation détergente peut comprendre des agents tensioactifs en une quantité correspondant à environ 3 à 40% en poids par rapport à la formulation détergente, agents tensioactifs tels que

*Agents tensioactifs anioniques*

. les alkylesters sulfonates de formule R-CH($SO_3$M)-COOR', où R représente un radical alkyle en $C_{8-20}$, de préférence en $C_{10}$-$C_{16}$, R' un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tetraméthylammonium, diméthylpiperidinium...) ou dérivé d'une alcanolamine (monoéthanolamine, diéthanolamine, triéthanolamine...). On peut citer tout particulièrement les méthyl ester sulfonates dont les radical R est en $C_{14}$-$C_{16}$;

. les alkylsulfates de formule $ROSO_3M$, où R représente un radical alkyle ou hydroxyalkyle en $C_5$-$C_{24}$, de préférence en $C_{10}$-$C_{18}$, M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;

. les alkylamides sulfatés de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;

. les sels d'acides gras saturés ou insaturés en $C_8$-$C_{24}$, de préférence en $C_{14}$-$C_{20}$, les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates ; le cation étant un métal alcalin (sodium, potassium, lithium), un reste ammonium substitué ou non substitué (méthyl-, diméthyl-, triméthyl-, tetraméthylammonium, diméthylpiperidinium...) ou dérivé d'une alcanolamine (monoéthanolamine, diéthanolamine, triéthanolamine...) ;

*Agents tensioactifs non-ioniques*

. les alkylphénols polyoxyalkylénés (polyoxyéthylénés, polyoxypropylénés, polyoxybutylénés) dont le substituant alkyle est en $C_6$-$C_{12}$ et contenant de 5 à 25 motifs oxyalkylènes ; à titre d'exemple, on peut citer les TRITON X-45, X-114, X-100 ou X-102 commercialisés par Rohm & Haas Cy.;
. les glucosamide, glucamide, glycérolamide ;
. les alcools aliphatiques en $C_8$-$C_{22}$ polyoxyalkylénés contenant de 1 à 25 motifs oxyalkylènes (oxyéthylène, oxypropylène) ; à titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., KYRO EOB commercialisé par The Procter & Gamble Cy. ;
. les produits résultant de la condensation de l'oxyde d'éthylène, le composé résultant de la condensation de l'oxyde de propylène avec le propylène glycol, tels les PLURONIC commercialisés par BASF ;
. les produits résultant de la condensation de l'oxyde d'éthylène, le composé résultant de la condensation de l'oxyde de propylène avec l'éthylènediamine, tels les TETRONIC commercialisés par BASF ;
. les oxydes d'amines tels que les oxydes d'alkyl $C_{10}$-$C_{18}$ diméthylamines, les oxydes d'alkoxy $C_8$-$C_{22}$ éthyl dihydroxy éthylamines ;
. les alkylpolyglycosides décrits dans US-A-4 565 647 ;
les amides d'acides gras en $C_8$-$C_{20}$;
. les acides gras éthoxylés ;
. les amides gras éthoxylés ;
. les amines éthoxylées.

*Agents tensioactifs amphotères et zwitterioniques*

. les alkyldiméthylbétaïnes, les alkylamidopropyldiméthylbétaïnes, les alkyltriméthylsuifobétaïnes, les produits de condensation d'acides gras et d'hydrolysats de protéines ;
. les alkylamphoacétates ou alkylamphodiacétates dont le groupe alkyle contient de 6 à 20 atomes de carbone.

Les adjuvants de détergence ("builders") améliorant les propriétés des agents tensioactifs, peuvent être mis en oeuvre en quantités correspondant à environ 5-50%, de préférence à environ 5-30% en poids pour les formules détergentes liquides ou à environ 10-80%, de préférence 15-50% en poids pour les formules détergentes en poudres, adjuvants de détergence tels que :

*Adjuvants de détergence inorganiques*

. les polyphosphates (tripolyphosphates, pyrophosphates, orthophosphates, hexamétaphosphates) de métaux alcalins, d'ammonium ou d'alcanolamines
. les tetraborates ou les précurseurs de borates ;
. les silicates, en particulier ceux présentant un rapport $SiO_2/Na_2O$ de l'ordre de 1,6/1 à 3,2/1 et les silicates lamellaires décrits dans US-A-4 664 839 ;
. les carbonates (bicarbonates, sesquicarbonates) alcalins ou alcalino-terreux ;
. les cogranulés de silicates hydratés de métaux alcalins et de carbonates de métaux alcalins (sodium ou de potassium) riches en atomes de silicium sous forme Q2 ou Q3, décrits dans EP-A-488 868 ;

. les aluminosilicates cristallins ou amorphes de métaux alcalins (sodium, potassium) ou d'ammonium, tels que les zéolithes A, P, X... ; la zéolithe A de taille de particules de l'ordre de 0,1-10 micromètres est préférée.

*Adjuvants de détergence organiques*

. les polyphosphonates hydrosolubles (éthane 1-hydroxy-1, 1-diphosphonates, sels de méthylène diphosphonates...) ;

. les sels hydrosolubles de polymères ou de copolymères carboxyliques ou leurs sels hydrosolubles tels que :

- les éthers polycarboxylates (acide oxydisuccinique et ses sels, tartrate monosuccinic acide et ses sels, tartrate disuccinic acide et ses sels) ;
- les éthers hydroxypolycarboxylates ;
- l'acide citrique et ses sels, l'acide mellitique, l'acide succinique et leurs sels ;
- les sels d'acides polyacétiques (éthylènediaminetetraacétates, nitrilotriacétates, N-(2 hydroxyéthyl)-nitrilodiacétates) ;
- les acides alkyl C5-C20 succiniques et leurs sels(2-dodécénylsuccinates, lauryl succinates) ;
- les esters polyacétals carboxyliques ;
- l'acide polyaspartique, l'acide polyglutamique et leurs sels ;
- les polyimides dérivés de la polycondensation de l'acide aspartique et/ou de l'acide glutamique ;
- les dérivés polycarboxyméthylés de l'acide glutamique ou d'autres acides aminés.

La formulation détergente peut comprendre en outre au moins un agent de blanchiment libérant de l'oxygène comprenant un percomposé, de préférence un persel.
Ledit agent de blanchiment peut être présent en une quantité correspondant à environ 1 à 30%, de préférence de 4 à 20% en poids par rapport à la formulation détergente.

Comme exemples de percomposés susceptibles d'être utilisés comme agents de blanchiment, il convient de citer notamment les perborates tels que le perborate de sodium monohydraté ou tétrahydraté ; les composés peroxygénés tels que le carbonate de sodium peroxyhydraté, le pyrophosphate peroxyhydraté, l'urée peroxyhydratée, le peroxyde de sodium, le persulfate de sodium.

Les agents de blanchiment préférés sont le perborate de sodium, mono- ou tétrahydraté et/ou le carbonate de sodium peroxyhydraté.

Lesdits agents sont généralement associés à un activateur de blanchiment générant in situ dans le milieu lessiviel, un peroxyacide carboxylique, en une quantité correspondant à environ 0,1 à 12%, de préférence de 0,5 à 8% en poids par rapport à la formulation détergente. Parmi ces activateurs, on peut mentionner, la tétraacétyléthylènediamine, la tétraacétylméthylènediamine, le tétraacétylglycoluryle, le p-acétoxybenzènesulfonate de sodium, le pentaacétylglucose, l'octaacétyllactose.

Peuvent également être mentionnés des agents de blanchiment non oxygénés, agissant par photoactivation en présence d'oxygène, agents tels que les phtalocyanines d'aluminium et/ou de zinc sulfonées.

La formulation détergente peut comprendre en outre des agents antisalissure ("soil release"), anti-redéposition, chélatants, dispersants, de fluorescence, suppresseurs de mousse, adoucissants, des enzymes et autres additifs divers.

*Agents anti-salissures*

Ils peuvent être mis en oeuvre en quantités d'environ 0,01-10%, de préférence environ 0,1-5%, et plus préférentiellement de l'ordre de 0,2-3% en poids.

On peut citer plus particulièrement les agents tels que :

. les dérivés cellulosiques tels que les hydroxyéthers de cellulose, la méthylcellulose, l'éthylcellulose, l'hydroxypropyl méthylcellulose, l'hydroxybutyl méthylcellulose ;

. les polyvinylesters greffés sur des troncs polyalkylènes tels que les polyvinylacétates greffés sur des troncs polyoxyéthylènes (EP-A-219 048) ;

. les alcools polyvinyliques ;

. les copolymères polyesters à base de motifs éthylène téréphtalate et/ou propylène téréphtalate et polyoxyéthylène téréphtalate, avec un rapport molaire (nombre de motifs) éthylène téréphtalate et/ou propylène téréphtalate / (nombre de motifs) polyoxyéthylène téréphtalate de l'ordre de 1 /10 à 10/1, de préférence de l'ordre de 1/1 à 9/1, les polyoxyéthylène téréphtalates présentant des unités polyoxyéthylène ayant un poids moléculaire de l'ordre de 300 à

5000, de préférence de l'ordre de 600 à 5000 (US-A-3 959 230, US-A-3 893 929, US-A-4 116 896, US-A-4 702 857, US-A-4 770 666) ;

. les oligomères polyesters sulfonés obtenus par sulfonation d'un oligomère dérivé de l'alcool allylique éthoxylé, du diméthyltéréphtalate et du 1,2-propylènediol, présentant de 1 à 4 groupes sulfonés (US-A-4 968 451); .les copolymères polyesters à base de motifs propylène téréphtalate et polyoxyéthylène téréphtalate et terminés par des motifs éthyles, méthyles (US-A-4 711 730) ou des oligomères polyesters terminés par des groupes alkylpolyéthoxy (US-A-4 702 857) ou des groupes anioniques sulfopolyéthoxy (US-A-4 721 580), sulfoaroyles (US-A-4 877 896) ;

. les copolymères polyesters sulfonés dérivés d'acide, anhydride ou diester téréphtalique, isophtalique et sulfoisophtalique et d'un diol (FR-A-2 720 399).

*Agents anti-redéposition,*

Ils peuvent être mis en oeuvre en quantités généralement d'environ 0,01-10% en poids pour une formulation détergente en poudre, d'environ 0,01-5% en poids pour une formulation détergente liquide.

On peut citer notamment les agents tels que :

. les monoamines ou polyamines éthoxylées, les polymères d'amines éthoxylées (US-A-4 597 898, EP-A-11 984) ;

. la carboxyméthylcellulose ;

. les oligomères polyesters sulfonés obtenus par condensation de l'acide isophtalique, du sulfosuccinate de diméthyle et de diéthylène glycol (FR-A-2 236 926) ;

. les polyvinylpyrollidones.

Agents chélatants

Les agents chélatants du fer et du magnésium, peuvent être présents en quantités de l'ordre de 0,1-10%, de préférence de l'ordre de 0,1-3% en poids.

On peut mentionner entre autres :

. les aminocarboxylates tels que les éthylènediaminetétraacétates, hydroxyéthyléthylènediaminetriacétates, nitrilotriacétates ;

. les aminophosphonates tels que les nitrilotris-(méthylènephosphonates) ;

. les composés aromatiques polyfonctionnels tels que les dihydroxy-disulfobenzènes.

*Agents dispersants polymériques,*

Ils peuvent être présents en quantité de l'ordre de 0,1-7% en poids, pour contrôler la dureté en calcium et magnésium, agents tels que

. les sels hydrosolubles d'acides polycarboxyliques de masse moléculaire de l'ordre de 2000 à 100 000, obtenus par polymérisation ou copolymérisation d'acides carboxyliques éthyléniquement insaturés tels que acide acrylique, acide ou anhydride maléique, acide fumarique, acide itaconique, acide aconitique, acide mésaconique, acide citraconique, acide méthylènemalonique, et tout particulièrement les polyacrylates de masse moléculaire de l'ordre de 2 000 à 10 000 (US-A-3 308 067), les copolymères d'acide arylique et d'anhydride maléique de masse moléculaire de l'ordre de 5 000 à 75 000 (EP-A-66 915)

. les polyéthylèneglycols de masse moléculaire de l'ordre de 1000 à 50 000.

*Agents de fluorescence (brighteners),*

Ils peuvent être présents en quantité d'environ 0,05-1,2% en poids, agents tels que : les dérivés de stilbène, pyrazoline, coumarine, acide fumarique, acide cinnamique, azoles, methinecyanines, thiophènes... ("The production and application of fluorescent brightening agents" - M. Zahradnik, publié par John Wiley & Sons, New York -1982).

*Agents suppresseurs de mousses,*

Ils peuvent être présents en quantités pouvant aller jusqu'à 5% en poids, agents tels que :

. les acides gras monocarboxyliques en $C_{10}$-$C_{24}$ ou leurs sels alcalins, d'ammonium ou alcanolamines, les triglycérides d'acides gras ;

. les hydrocarbures saturés ou insaturés aliphatiques, alicycliques, aromatiques ou hétérocycliques, tels que les paraffines, les cires ;
. les N-alkylaminotriazines ;
. les monostéarylphosphates, les monostéarylalcoolphosphates ;
. les huiles ou résines polyorganosiloxanes éventuellement combinées avec des particules de silice.

*Agents adoucissants*

Ils peuvent être présents en quantités d'environ 0,5-10% en poids, agents tels que les argiles.

*Enzymes*

Elles peuvent être présentes en une quantité pouvant aller jusqu'à 5 mg en poids, de préférence de l'ordre de 0,05-3 mg d'enzyme active /g de formulation détergente, enzymes telles que :

. les protéases, amylases, lipases, cellulases, peroxydases (US-A-3 553 139, US-A-4101 457, US-A-4 507 219, US-A-4 261 868).

*Autres additifs*

On peut citer entre autres :

. des agents tampons,
. des parfums,
. des pigments.

La formulation détergente peut être mise en oeuvre, notamment en lave-linge, à raison de 0,5g/l à 20g/l, de préférence de 2g/l à 10g/l pour réaliser des opérations de lavage à une température de l'ordre de 25 à 90 °C.

Un deuxième mode de réalisation de l'invention consiste en l'utilisation dudit polysaccharide amphotère dans une formulation aqueuse liquide de rinçage et/ou d'adoucissage du linge.
Cette formulation peut être mise en oeuvre à raison de 0,2 à 10g/l, de préférence de 2 à 10g/l.
A côté du polysaccharide amphotère, peuvent être présents d'autres constituants du type

- associations d'agents tensioactifs cationiques (diester de triéthanolamine quaternisé par du diméthylsulfate, N-méthylimidazoline tallow ester méthyl sulfate, chlorure de dialkyldiméthylammonium, chlorure d'alkylbenzyldiméthylammonium, sulfate de méthyle et d'alkylimidazolinium, sulfate de méthyle et de méthyl-bis(alkylamidoéthyl)-2 hydroxyéthylammonium...) en quantité pouvant aller de 3 à 50%, de préférence de 4 à 30% de ladite formulation éventuellement associés à des tensioactifs non ioniques (alcools gras éthoxylés, alkylphénols éthoxylés ...) en quantité pouvant aller jusqu'à 3% ;
- azurants optiques (0,1 à 0,2%);
- éventuellement agents anti-transfert de couleur (polyvinylpyrrolidone, polyvinyloxazolidone, polyméthacrylamide... 0,03 à 25%, de préférence 0,1 à 15%)
- colorants,
- parfums,
- solvants, notamment des alcools (méthanol, éthanol, propanol, isopropanol, éthylèneglycol, glycérine)
- limiteurs de mousse.

Un troisième mode de réalisation de l'invention consiste en l'utilisation dudit polysaccharide amphotère dans un additif de séchage du linge dans une machine séchante appropriée.
Ledit additif comprend un support solide flexible constitué par exemple par une bande de textile tissé ou non-tissé, une feuille de cellulose, imprégnée dudit polysaccharide amphotère ; ledit additif est introduit au séchage dans le linge humide à sécher à une température de l'ordre de 50 à 80 °C pendant 10 à 60 minutes.
Ledit additif peut en outre comprendre des agents adoucissants cationiques (jusqu'à 99%) et des agents anti-transfert de couleurs (jusqu'à 80%) tels que ceux mentionnés ci-dessus.

Un quatrième mode de réalisation de l'invention consiste en l'utilisation dudit polysaccharide amphotère dans une formulation de repassage qui peut être pulvérisée directement sur le linge sec avant l'opération de repassage. Ladite formulation peut en outre contenir des polymères à base de silicone (de 0,2 à 5%), des agents tensioactifs non-ioniques (de 0,5 à 5%) ou anioniques (de 0,5 à 5%), des parfums (0,1 à 3%), des dérivés cellulosiques (0,1 à 3%)

comme l'amidon ; la pulvérisation de ladite formulation sur le linge permet de faciliter le repassage et de limiter le froissage du linge au porté.

Un cinquième mode de réalisation de l'invention consiste en l'utilisation dudit polysaccharide amphotère dans un additif de lavage ("prespotter") se présentant sous forme d'une solution ou d'une dispersion aqueuse ou d'un solide (bâton).

A côté du polysaccharide amphotère peuvent être présents d'autres constituants du type

- tensioactifs anioniques tels que ceux déjà mentionnés ci-dessus, en quantité d'au moins 5% du poids de la composition
- tensioactifs non-ioniques tels que ceux déjà mentionnés ci-dessus, en quantité pouvant aller de 15% à 40% du poids de la composition
- des hydrocarbures aliphatiques, en quantité pouvant aller de 5% à 20% du poids de la composition.

La présente invention a également pour objet les compositions aqueuses liquides de rinçage et/ou d'adoucissage, les additifs de séchage, les compositions aqueuses de repassage et les additifs de séchage décrits ci-dessus.

Les exemples suivants sont donnés à titre illustratif.

La masse molaire en poids est déterminée comme suit par chromatographie par exclusion de taille.

La mesure est effectuée dans l'eau à pH acide contenant 0.1 M d'acide formique, 0.05 M de nitrate de sodium et 10 ppm de $PDMDMACl^-$.

Les caractéristiques de l'appareil sont les suivantes :

- Colonnes chromatographiques : 3 colonnes Shodex SB806HQ 30cm, 5 μm, 40°C
- Injecteur-pompe : Waters 515 + Wisp 717+
- Détecteur : Réfractomètre RI Waters 410 Sensibilité 8, diffusion de lumières MALLS Wyatt, Laser He 633nm
- Débit : 1 ml/minute
  La solution injectée (200 μl) contient environ 0.2 % en poids de polysaccharide polyampholyte. La masse moléculaire en poids est établie directement sans calibration à l'aide des valeurs de diffusion de la lumière extrapolées à angle nul ; ces valeurs sont proportionnelles à $CxMx(dn/dc)^2$.
- C correspond à la concentration en polysaccharide
- M correspond à la masse moléculaire en poids
- n correspond à l'indice optique de la solution
- c correspond à la concentration en polysaccharide
- le rapport dn/dc est ici égal à 0,150

## Exemples 1-3

- a - Modification d'un guar par du chlorure de 3-chloro 2-hydroxypropyltriméthyle ammonium

La synthèse est réalisée dans un réacteur/mélangeur de 3 litres, chauffé par double enveloppe. L'agitation est assurée par un arbre horizontal équipé de branches à géométrie spécifique et par des contre-pales fixées sur le corps du réacteur. L'entrefer de quelques millimètres permet d'agiter des particules solides sans trop de cisaillement.

Le déroulement de l'essai se déroule selon les différentes étapes suivantes :

- Introduction d'eau distillée (220 g) à 30°C puis charge du réactif chlorure de 3-chloro 2-hydroxypropyltriméthyle ammonium (0.56 mole soit 133 g à 65% dans H2O) et mélange pendant 1 minute.
- Introduction d'une première charge de soude (93g de NaOH à 20% dans l'eau) et mélange pendant 1 minute, la température étant maintenue inférieure à 38°C
- Introduction de guar de masse molaire en poids d'environ 2 500 000 g/mole sous forme divisée (de "splits") (400 g) puis purge du milieu réactionnel par alternance de mise sous vide et de mise sous pression (au moins 3 fois)
- Introduction d'une deuxième charge de soude (82 g à 20% dans l'eau) en 20-30 minutes, puis de nouveau purge du milieu réactionnel
- Mise en chauffe pour atteindre 43-50°C puis maintien à 43-50°C pendant 40 minutes sous légère sur-pression d'azote
- Après réaction, on introduit 16 g d'une solution aqueuse de borax à 3% et 5 g de carboglace ($CO_2$). La vidange du réacteur a lieu après refroidissement à une température inférieure à 38°C.
- Le milieu réactionnel peut être lavé avec de l'eau puis de l'acétone, puis séché sous vide à 40°C.

- b - Modification du chlorure d'hydroxypropyltriméthylammonium guar par de l'acide monochloracétique

Dans un ballon à 4 cols de capacité 1 litre muni d'un réfrigérant et d'un agitateur à pales téflon actionné par un moteur, on introduit, après avoir purgé longuement le système avec de l'argon, 368 ml d'alcool isopropyle (IPA). Après la mise en route de l'agitation (150 tours/minute), on charge 50 g du réactif guar cationique en poudre. On obtient une dispersion homogène puis on charge 120 grammes d'une solution aqueuse de soude à 9.36% (soit 0.2823 mole de soude). On rince avec 10ml d'IPA. La guar cationique gonfle, a tendance à décanter et à coller aux parois. L'augmentation de la vitesse d'agitation à 277 tours/minute permet la redispersion de la poudre et on laisse le milieu tel quel pendant 1 h30, sous ciel d'argon. On charge ensuite x mole d'acide monochloroacétique (AMCA) dissous dans 50ml d'IPA.
Les quantités x d'AMCA sont les suivantes :

| Exemple | x | Rapport NaOH/AMCA |
|---|---|---|
| 1 | 0.136 mole | 2/1 |
| 2 | 0.54 mole | 4/1 |
| 3 | 1.08 mole | 8/1 |

On rince avec 10ml d'IPA. La masse réactionnelle est ensuite chauffée à 60°C à l'aide d'un bain thermostaté à 66°C et on laisse dans ces conditions pendant 3h30 à 60°C. Après ce temps, le chauffage est arrêté et la masse réactionnelle refroidie à 25°C.
Le milieu réactionnel est filtré sur un fritté n°3. On isole ainsi un solide humide beige/orangé, le filtrat étant jaune clair limpide et basique. Le solide est alors dissous dans 700ml d'eau déminéralisée et on obtient une solution très visqueuse. Le produit est alors précipité dans du méthanol puis filtré et lavé avec des mélanges MeOH/$H_2O$ (80/20) jusqu'à obtenir un pH du filtrat à environ 7. Un dernier lavage est réalisé avec du méthanol pur et le solide est isolé et séché en étuve à 45°C sous 100 mm de Hg.

Les caractéristiques des guars ampholytes obtenus sont les suivantes :

| Ex. | DS fonction cationique | DS fonction anionique | Rapport molaire théorique charge anionique/ cationique (théorique) | Masse molaire en poids g/ mole |
|---|---|---|---|---|
| 1 | 0,14 | 0,35 | 2,5/1 | 2 150 000 |
| 2 | 0,14 | 1,40 | 10/1 | 1 350 000 |
| 3 | 0,14 | 2,8 | 20/1 | 1 150000 |

**Exemple 4**

Formulation détergente

| **Formulation** | **(A) avec P** | **(B) couleur sans P** | **(C) sans P** |
|---|---|---|---|
| **Constituants** | **% en poids** | **% en poids** | **% en poids** |
| NaTPP | 40 | | |
| Zéolite 4A | 0 | 25 | 25 |
| Silicate 2 $SiO_2$, $Na_2O$ | 5 | 5 | 5 |
| Carbonate de sodium | 5 | 15 | 15 |
| Copolymère acrylate / maléate Sokalan CP5 (BASF) | 0 | 5 | 5 |
| Sulfate de sodium | 7 | 20 | 7 |

(suite)

| Formulation | (A) avec P | (B) couleur sans P | (C) sans P |
|---|---|---|---|
| **Constituants** | **% en poids** | **% en poids** | **% en poids** |
| CMC blanose 7MXF (HERCULES) | 1 | 1 | 1 |
| Perborate monohydraté | 15 | 0 | 15 |
| TAED granulé | 5 0 5 | | |
| Tensioactif anionique Laurylbenzène sulfate (Nansa) | 6 | 8 | 6 |
| Tensioactif non ionique Symperonic A3 (alcool éthoxylé 3 OE - ICI) | 3 | 5 | 3 |
| Tensioactif non ionique Symperonic A9 (alcool éthoxylé 9 OE ICI) | 9 | 11 | 9 |
| Enzymes (espérases, amylases, cellulase, protéase) | 0,5 | 0,5 | 0,5 |
| Parfums | 1 | 1 | 1 |
| Polysaccharide amphotère (% en sec) De l'exemple 1, 2 ou 3 | 2,0 | 2,0 | 2,0 |
| Polyvinylpyrrolidone | 0 | 1 | 0 |
| Copolyester sulfoné antisalissure REPEL O TEX PF 594 de Rhodia | 0,5 | 0,5 | 0,5 |

On réalise une opération de lavage dans un appareil de laboratoire Tergotomètre bien connu dans la profession des formulateurs de compositions détergentes. L'appareil simule les effets mécaniques et thermiques des machines à laver de type américain à pulsateur, mais grâce à la présence de 6 pots de lavage, il permet de réaliser des séries d'essais simultanés avec une économie de temps appréciable.
On découpe des éprouvettes de coton désapprêté de dimensions 20X20 cm.
Les éprouvettes de coton sont d'abord repassées afin d'avoir toutes le même niveau de froissage avant lavage.
Elles sont ensuite lavées à l'aide de la formulation détergente ci-dessus contenant le polysaccharide amphiphile et rincées 1 fois, dans les conditions suivantes :

- nombre d'éprouvettes par pot du Tergotomètre : 2
- volume d'eau : 1 litre
- eau de dureté française 30°TH obtenue par dilution appropriée d'eau minérale de marque Contrexéville®
- concentration en lessive : 5 g/l
- température de lavage : 40°C
- durée du lavage : 20 min
- vitesse d'agitation du Tergotomètre : 100 RPM
- rinçage à l'eau froide (environ 30°TH)
- durée de rinçage : 5 minutes

Les éprouvettes sont ensuites froissées sous une presse de 3kg pendant 20 secondes, puis mises à sécher verticalement pendant une nuit.

La même opération est réalisée à l'aide de la même formulation détergente mais exempte de polysaccharide amphiphile.

On réalise ensuite une photographie numérique en couleur des éprouvettes sèches, qui est ensuite transformée en 256 niveaux de gris (échelle de gris de 0 à 255).
On compte le nombre de pixels correspondant à chaque niveau de gris.
Pour chaque histogramme obtenu, on mesure l'écart type $\underline{\sigma}$ de la distribution du niveau de gris.
$\underline{\sigma 1}$ correspond à l'écart type obtenu avec la formulation détergente ne renfermant pas de polysaccharide amphiphile.
$\underline{\sigma 2}$ correspond à l'écart type obtenu avec la formulation détergente renfermant le polysaccharide amphiphile.
La valeur de performance est donnée par l'équation $-\Delta\sigma = \sigma 2 - \sigma 1$
Les valeurs de performance obtenues sont les suivantes :

| Formulation Avec le polysaccharide amphotère de <u>l'exemple 1</u> | (A) | (B) | (C) |
|---|---|---|---|
| $-\Delta\sigma$ | +2,6 | +2,8 | +2,7 |

| Formulation (B) avec le polysaccharide amphotère de l'exemple | 2 | 1 | 3 |
|---|---|---|---|
| -Δσ | +1 | +2,8 | +2,1 |

Ces valeurs positives de -Δσ sont représentatives d'une propriété d'antifroissage apportée par la formulation détergente comprenant le polysaccharide amphiphile selon l'invention.

**Exemple 5**

Formulation de rinçage/adoucissage

| Constituants | % en poids |
|---|---|
| Tensioactif cationique : Chlorure de ditallowdimethylammonium | 5% |
| Parfum | 1 % |
| HCI pour obtenir un pH = 3 | 0,2 % |
| Polysaccharide amphotère des exemples 1 à 3 (% en sec) | 2 % |

**Exemple 6**

MESURE DE LA PROTECTION DES COULEURS

PRINCIPE

Il consiste à effectuer, dans des conditions définies, 10 lavages d'un échantillonage de plusieurs tissus colorés en coton. L'efficacité de protection des couleurs est testée en lave linge automatisé. L'évaluation proprement dite s'effectue par une mesure de réflectance. Les tissus sont examinés avant et après 10 avages. La variation de couleur ainsi enregistrée (ΔE*) constitue la perte de couleur sur chaque type de tissu.

APPAREILLAGES - RÉACTIFS

* Lave linge automatisé AEG Lavamat 2050 Turbo :

    Lave linge commercial à hublot frontal - cycles de lavage à 40°C - volume d'eau au lavage : 13 litres
    Programme enregistré : 10 cycles de lavage

* Réflectomètre LUCI100 - Dr Lange :

    Il s'agit d'un appareil de réflectance utilisé pour mesurer les couleurs des tissus avant et après lavage.

* 6 Torchons : en coton écru référencé 402MBLI (provenance D. PORTHAULT SA)
* 4 Serviettes (comme ballast) : Serviette éponge en coton blanc bouclettes 500 g/m2 (provenance D. PORTHAULT SA)
* Echantillonage de 3 différents tissus commerciaux colorés

    . coton tissé noir
    . coton tissé rouge
    . coton tissé violet

MODE OPERATOIRE

Conditions de lavage :

| | |
|---|---|
| Température de lavage : | 40°C |
| Durée : | environ 67 mn |
| Nombre de lavage : | 10 |
| Charge de linge : | 3 kg en sec (4 serviettes + 6 torchons + tissus colorés) |
| Volume du bain : | 13 litres ±1 litre |
| Dureté de l'eau : | environ 23°TH français |
| Concentration formule lessivielle : | 5 ± 0,1 g/l |

Mode opératoire : 5 étapes

. Mesure de couleur des éprouvettes de tissus neufs
. Couture des éprouvettes de tissus colorés sur les torchons afin d'éviter l'effilochage au cours des lavages successifs
. réalisation des 10 lavages sans séchage entre les cycles
. séchage à l'air libre
. mesure de couleurs sur les tissus lavés

Les couleurs sont mesurée sur réflectomètre LUCI100 :
Le système de mesure utilisé est le CIE-**L* a* b*** (DIN6174, CIE-LAB 1976).
Il se décompose comme suit :
**L*** correspond au degré de blanc sur une échelle blanc - noir.

| | |
|---|---|
| L*=100 | pour une éprouvette blanche |
| L*=0 | pour une éprouvette noire |

**a*** situe la couleur dans une gamme allant du vert au rouge.

| | |
|---|---|
| a* ≥0 | la couleur tire sur le rouge. |
| a* ≤ 0 | la couleur tire sur le vert |

**b*** situe la couleur dans lune gamme allant du jaune au bleu.

| | |
|---|---|
| b* ≥0 | la couleur tire sur le jaune. |
| b*≤0 | la couleur tire sur le bleu. |

Chaque éprouvette de tissu est mesurée en 5 points différents (un au centre et un à chaque coin) et la moyenne des composantes L*, a* et b* est calculée.

EXPLOITATION DES RÉSULTATS :

Le réflectomètre est équipé d'un logiciel qui calcule indirectement le ΔE* à partir des données enregistrées précédemment. Cette valeur correspond à la variation de couleur enregistrée sur le tissu après lavage et est exprimée comme suit :

$$\Delta L^* = L^*_{\text{après lavage}} - L^*_{\text{avant lavage}}$$
$$\Delta a^* = a^*_{\text{après lavage}} - a^*_{\text{avant lavage}}$$
$$\Delta b^* = b^*_{\text{après lavage}} - b^*_{\text{avant lavage}}$$

La perte de couleur pour chaque tissu est alors donnée par l'expression suivante:

$$\Delta E^* = \sqrt{(\Delta L^*)^2 + (\Delta a^*)^2 + (\Delta b^*)^2}$$

La performance du polysaccharide par rapport à la référence est mesurée comme la différence de ΔE* entre les formules sans et avec polysaccharide.

La perte de couleur cumulée est calculée comme la somme des pertes de couleurs des tissus colorés.

On prépare les formulations détergentes (F1) et (F2) suivantes

| **Formulation** | **(F1) sans P** | **(F2) sans P** |
|---|---|---|
| **Constituants** | **% en poids** | **% en poids** |
| NaTPP | | |
| Zéolite 4A | 25 | 25 |
| Silicate 2 $SiO_2$, $Na_2O$ | 5 | 5 |
| Carbonate de sodium | 15 | 15 |
| Copolymère acrylate / maléate Sokalan CP5 (BASF) | 5 | 5 |
| Sulfate de sodium | 9 | 8,5 |
| CMC blanose 7MXF (HERCULES) | 1 | 1 |
| Perborate monohydraté | 15 | 15 |
| TAED granulé | 5 | 5 |
| Tensioactif anionique Laurylbenzène sulfate (Nansa) | 6 | 6 |
| Tensioactif non ionique Symperonic A3 (alcool éthoxylé 3 OE - ICI) | 3 | 3 |
| Tensioactif non ionique Symperonic A9 (alcool éthoxylé 9 OE ICI) | 9 | 9 |
| Enzymes (espérases, amylases, cellulase, protéase) | 0,5 | 0,5 |
| Parfums | 1 | 1 |
| Polysaccharide amphotère (% en sec) de l'exemple 2 | 0 | 0,5 |
| Polyvinylpyrrolidone | 0 | 0 |
| Copolyester sulfoné antisalissure REPEL O TEX PF 594 de Rhodia | 0,5 | 0,5 |

La formulation (F1) sans polysaccharide amphotère et la formulation (F2) comprenant 0,5% de polysaccharide amphotère sont testées comme ci-dessus décrit.

L'indice de protection (IP) en % des couleurs est donné par l'expression suivante

$$IP = \{[\Delta E \text{ de } (F1) - [\Delta E \text{ de } (F2)] / [\Delta E \text{ de } (F1)]\} \times 100$$

Les résultats obtenus sont les suivants :

| **Tissu** | **(F1)** | **(F2)** | **IP** |
|---|---|---|---|
| Noir | 5,0 | 3,8 | 24% |
| Rouge | 6,5 | 2,7 | 58% |
| Violet | 6,5 | 6,1 | 7% |
| Perte de couleur cumulée ΔE | 18 | 12,6 | 27% |

Ces résultats montrent que la présence de polysaccharide amphotère dans la formulation (F) permet d'améliorer la protection des couleurs.

## Revendications

1. Utilisation, dans une composition pour le traitement des articles en fibres textiles en milieu aqueux ou humide, d'au moins un polysaccharide amphotère, dont le squelette natif est un polysaccharide formé

   * d'une chaîne principale comprenant des unités anhydrohexoses semblables ou différentes
   * et de ramifications comprenant au moins une unité anhydropentose et/ou anhydrohexose neutre ou anionique,

   les unités anhydrohexoses et/ou anhydropentoses dudit polysaccharide amphotère étant substituées ou modifiées par un ou des groupes porteur(s) d'au moins une charge anionique ou potentiellement anionique et/ou d'au moins une charge cationique ou potentiellement cationique,
   le degré de substitution ou de modification DSi des unités anhydrohexoses et/ou anhydropentoses par l'ensemble desdits groupes porteurs de charges ioniques ou potentiellement ioniques allant de 0,01 à moins de 3, de préférence de 0,05 à 2,5 ,
   avec un rapport du nombre de charges anioniques ou potentiellement anioniques au nombre de charges cationiques ou potentiellement cationiques allant de 99,5/0,5 à 30/70, de préférence de 99,5/0,5 à 50/50,
   comme agent permettant d'éviter la dégradation desdits articles et/ou permettant de protéger les couleurs desdits articles et/ou apportant des propriétés d'antifroissage et/ou d'adoucissage auxdits articles.

2. Utilisation selon la revendication 1), **caractérisée en ce que** la masse molaire en poids dudit polysaccharide amphotère va de 2000 à 3 000 000, de préférence de 10 000 à 2 000 000, tout particulièrement de 10 000 à 500 000.

3. Utilisation selon la revendication 1) ou 2), **caractérisée en ce que** les groupes ioniques ou potentiellement ioniques dudit polysaccharide amphotère sont liés aux atomes de carbone du squelette sucre soit directement soit par l'intermédiaire de liaisons -O-.

4. Utilisation selon l'une des revendications 1) à 3), **caractérisée en ce que** les charges anioniques ou potentiellement anioniques dudit polysaccharide amphotère sont apportées par des groupes substituants ou modifiants différents de ceux porteurs de charges cationiques ou potentiellement cationiques.

5. Utilisation selon l'une des revendications 1) à 3), **caractérisée en ce que** les charges anioniques ou potentiellement anioniques et les charges cationiques ou potentiellement cationiques dudit polysaccharide amphotère sont apportées par un même groupe substituant ou modifiant bétaïne.

6. Utilisation selon l'une des revendications 1) à 5), **caractérisée en ce que** ledit polysaccharide amphotère présente en outre au moins un groupe non-ionique.

7. Utilisation selon la revendication 6), **caractérisée en ce que** ledit groupe non-ionique dudit polysaccharide amphotère est lié à un atome de carbone du squelette sucre soit directement soit par l'intermédiaire de liaisons -O-.

8. Utilisation selon la revendication 4), **caractérisée en ce que** les groupes anioniques ou potentiellement anioniques dudit polysaccharide amphotère sont choisis parmi les fonctions carboxylate (carboxylique), sulfonate (sulfonique), sulfate (sulfate acide), phosphate (phosphate acide), phosphonate (phosphonate acide) ou leurs mélanges.

9. Utilisation selon la revendication 8), **caractérisée en ce que** les groupes anioniques ou potentiellement anioniques dudit polysaccharide amphotère sont choisis parmi ceux de formule

   $$-[-CH_2-CH(R)-O]_x-(CH_2)_y-COOH$$

   ou

   $$-[-CH_2-CH(R)-O]_x-(CH_2)_y-COOM$$

   où

R est un atome d'hydrogène ou un radical alkyle contenant de 1 à 4 atomes de carbone
x est un nombre entier allant de 0 à 5
y est un nombre entier allant de 0 à 5
M représente un métal alcalin.

**10.** Utilisation selon la revendication 4), **caractérisée en ce que** les groupes cationiques ou potentiellement cationiques dudit polysaccharide amphotère sont choisis parmi ceux contenant une ou plusieurs fonctions amino, ammonium, phosphonium, pyridinium ou leurs mélanges.

**11.** Utilisation selon la revendication 10), **caractérisée en ce que** les groupes cationiques ou potentiellement cationiques dudit polysaccharide amphotère ont pour formule

- $-NH_2$
- $-[-CH_2-CH(R)-O]_x-(CH_2)_y-COA-R'-N(R'')_2$
- $-[-CH_2-CH(R)-O]_x-(CH_2)_y-COA-R'-N^+(R''')_3\ X^-$
- $-[-CH_2-CH(R)-O]_x-(CH_2)_y-COA-R'-NH-R''''-N(R'')_2$
- $-[-CH_2-CH(R)-O]_x-R'-N(R'')_2$
- $-[-CH_2-CH(R)-O]_x-R'-N^+(R''')_3\ X^-$
- $-[-CH_2-CH(R)-O]_x-R'-NH-R''''-N(R'')_2$
- $-[-CH_2-CH(R)-O]_x-Y-R''$

où

. R est un atome d'hydrogène ou un radical alkyle contenant de 1 à 4 atomes de carbone
. x est un nombre entier allant de 0 à 5
. y est un nombre entier allant de 0 à 5
. R' est un radical alkylène contenant de 1 à 12 atomes de carbone, portant éventuellement un ou plusieurs substituants OH
. les radicaux R", semblables ou différents, représentent un atome d'hydrogène, un radical alkyle contenant de 1 à 18 atomes de carbone
. les radicaux R"', semblables ou différents, représentent un radical alkyle contenant de 1 à 18 atomes de carbone
. R"" est un radical alkylène linéaire, ramifié ou cyclique contenant de 1 à 6 atomes de carbone
. A représente O ou NH
. Y est un groupement aliphatique hétérocyclique comprenant de 5 à 20 atomes de carbone et un hétéroatome d'azote
. $X^-$ est un contre-ion, de préférence halogénure,
ainsi que les groupes N-alkylpyridinium-yle dont le radical alkyle contient de 1 à 18 atomes de carbone, avec un contre-ion, de préférence halogénure.

**12.** Utilisation selon la revendication 11), **caractérisée en ce que** les groupes cationiques ou potentiellement cationiques dudit polysaccharide amphotère sont choisis parmi

- ceux de formule

$-NH_2$

$-CH_2-CONH-(CH_2)_2-N(CH_3)_2$

$-CH_2-COO-(CH_2)_2-NH-(CH_2)_2-N(CH_3)_2$

$-CH_2-CONH-(CH_2)_3-NH-(CH_2)_2-N(CH_3)_2$

$-CH_2-CONH-(CH_2)_2-NH-(CH_2)_2-N(CH_3)_2$

$-CH_2-CONH-(CH_2)_2-N^+(CH_3)_3\ Cl^-$

$-CH_2-CONH-(CH_2)_3-N^+(CH_3)_3\ Cl^-$

$-(CH_2)_2-N(CH_3)_2$

$-(CH_2)_2-NH-(CH_2)_2-N(CH_3)_2$

$-(CH_2)_2-N^+(CH_3)_3\ Cl^-$

2-hydroxypropyltriméthyl ammonium chlorure $-CH_2-CH(OH)-CH_2-N^+(CH_3)_3\ Cl^-$
- les groupements pyridinium-yle tels que N-méthyl pyridinium-yle, de formule

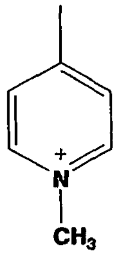

avec un contre-ion chlorure
- les groupements amino encombrés, de préférence ceux dérivés d'amines HALS, de formule générale :

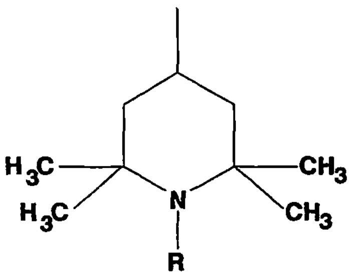

où R représente CH3 ou H.

**13.** Utilisation selon la revendication 5), **caractérisée en ce que** les groupements ioniques bétaines dudit polysaccharide amphotère sont choisis parmi les fonctions de formule :

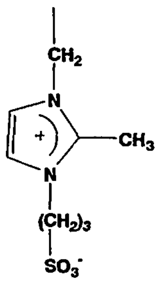

fonction 2-méthyl (3-sulfopropyl) imidazolium

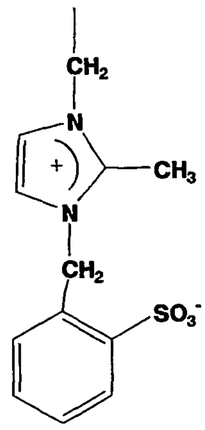

fonction (2-sulfobenzyl) imidazolium

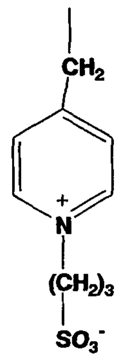

fonction (3-sulfopropyl) pyridinium
$-(CH_2)_2-N^+(CH_3)_2-(CH_2)_2-COO^-$ fonction éthyl-diméthylammonium bétaïne
$-(CH_2)_2-N^+(CH_3)_2-(CH_2)_3-SO_3^-$ fonction sulfo-propyl diméthylammonium

**14.** Utilisation selon l'une des revendications 1) à 13), **caractérisée en ce que** les groupements non-ioniques dudit polysaccharide amphotère sont choisis parmi ceux de formule :

• $-[-CH_2-CH(R)-O]_x-R^1$ où
R est un atome d'hydrogène ou radical alkyle contenant de 1 à 4 atomes de carbone
x est un nombre entier allant de 0 à 5
$R^1$ représente

. un atome d'hydrogène
. un radical alkyle contenant de 1 à 22 atomes de carbone éventuellement interrompu par un ou plusieurs hétéroatome oxygène et/ou azote, cycloalkyle, aryle, arylalkyle, contenant de 6 à 12 atomes de carbone
. un radical $-(CH_2)_y-COOR^2$
. un radical $-(CH_2)_y-CN$
. un radical $-(CH_2)_y-CONHR^2$

$R^2$ représentant un radical alkyle, aryle ou arylalkyle contenant de 1 à 22 atomes de carbone,
et y est un nombre entier allant de 0 à 5
• $-CO-NH-R^1$
$R^1$ ayant la définition donnée ci-dessus,
lié à un atome de carbone du squelette sucre par l'intermédiaire d'une liaison -O-

**15.** Utilisation selon la revendication 14), **caractérisée en ce que** les groupements non-ioniques dudit polysaccharide amphotère sont choisis parmi les groupes

. méthyle, éthyle, propyle, isopropyle, butyle, hexyle, octyle, dodécyle, octadécyle, phényle, benzyle, liés à un atome de carbone du squelette sucre par l'intermédiaire d'une liaison éther, ester, amide ou uréthane,
. cyanoéthyle, hydroxyéthyle, hydroxypropyle, hydroxybutyle, liés à un atome de carbone du squelette sucre par l'intermédiaire d'une liaison -O-.

**16.** Utilisation selon l'une des revendications 1) à 15), **caractérisée en ce que** le squelette natif dudit polysaccharide amphotère est choisi parmi les galactomannanes, les galactoglucomannanes, les xyloglucanes, les gommes xanthanes, les scleroglucannes, les succinoglycanes, les rhamsans, les gommes welan.

**17.** Utilisation selon la revendication 16), **caractérisée en ce que** le squelette natif dudit polysaccharide amphotère est un galactomannane.

**18.** Utilisation selon la revendication 17), **caractérisée en ce que** le squelette natif dudit polysaccharide amphotère est une gomme guar.

**19.** Utilisation selon l'une des revendications 1) à 4), 6) à 12) et 14) à 18), **caractérisée en ce que** ledit polysaccharide amphotère est choisi parmi

- les carboxyméthyle chlorure d'hydroxypropyltriméthylammonium galactomannanes, en particulier les carboxyméthyle chlorure d'hydroxypropyltriméthylammonium guars,
- les carboxyméthyle hydroxypropyle chlorure d'hydroxypropyltriméthylammonium galactomannanes, en particulier les carboxyméthyle hydroxypropyle chlorure d'hydroxypropyltriméthylammonium guars.

**20.** Utilisation selon l'une quelconque des revendications 1) à 19), **caractérisée en ce que** ladite composition pour le traitement des articles en fibres textiles en milieu aqueux ou humide se présente

* sous forme d'un solide ou d'une dispersion ou d'une solution aqueuse concentrée, mis en contact avec les articles à traiter, après dilution dans l'eau ;
* sous forme d'une dispersion ou d'une solution aqueuse concentrée préalablement déposée sur les articles secs à traiter avant dilution dans l'eau ;
* sous forme d'une dispersion ou d'une solution aqueuse à déposer directement sur les articles secs à traiter sans dilution ou d'un support solide comprenant ledit polysaccharide amphotère, à appliquer directement sur les articles secs à traiter ;
* ou sous forme d'un support solide insoluble comprenant ledit polysaccharide amphotère mis en contact directement avec les articles à traiter à l'état humide.

**21.** Utilisation selon l'une quelconque des revendications 1) à 20), **caractérisée en ce que** la quantité dudit polysaccharide amphotère va de 0,05 à 10% en sec par rapport au poids de ladite composition exprimé en sec.

**22.** Utilisation selon l'une quelconque des revendications 1) à 21), **caractérisée en ce que** ladite composition est une formulation détergente solide ou liquide comprenant de 0,05 à 5 % en poids dudit polysaccharide amphotère, composition susceptible de former directement par dilution un bain lessiviel.

**23.** Utilisation selon l'une quelconque des revendications 1) à 21), **caractérisée en ce que** ladite composition est une formulation aqueuse liquide de rinçage et/ou d'adoucissage comprenant de 0,05 à 3 % en poids dudit polysaccharide amphotère, composition susceptible de former directement par dilution un bain de rinçage et/ou d'adoucissage.

**24.** Utilisation selon l'une quelconque des revendications 1) à 21), **caractérisée en ce que** ladite composition est un additif de séchage sous forme d'un matériau solide, textile de préférence, comprenant de 0,05 à 10% en poids dudit polysaccharide amphotère, composition destinée à être mise en contact avec les articles textiles humides dans un sèche-linge.

**25.** Utilisation selon l'une quelconque des revendications 1) à 21), **caractérisée en ce que** ladite composition est une formulation aqueuse liquide de repassage comprenant de 0,05 à 10 % en poids dudit polysaccharide amphotère.

**26.** Utilisation selon l'une quelconque des revendications 1) à 21), **caractérisée en ce que** ladite composition est un additif de lavage comprenant de 0,05 à 10 % en poids dudit polysaccharide amphotère, destiné à être déposé sur les articles secs préalablement à une opération de lavage à l'aide d'une formulation détergente contenant ou ne contenant pas ledit polysaccharide amphotère.

**27.** Procédé pour améliorer les propriétés des compositions pour le traitement ou le soin des articles en fibres textiles en milieu aqueux ou humide, par addition auxdites compositions d'au moins un polysaccharide amphotère dont l'utilisation fait l'objet de l'une quelconque des revendications 1) à 19), comme agent permettant d'éviter la dégradation desdits articles et/ou permettant de protéger les couleurs desdits articles et/ou apportant des propriétés d'antifroissage et/ou d'adoucissage auxdits articles.

**28.** Procédé selon la revendication 27), **caractérisé en ce que** la composition pour le traitement ou le soin des articles en fibres textiles en milieu aqueux ou humide est choisie parmi celles se présentant

* sous forme d'un solide ou d'une dispersion ou d'une solution aqueuse concentrée, mis en contact avec les articles à traiter, après dilution dans l'eau ;
* sous forme d'une dispersion ou d'une solution aqueuse concentrée préalablement déposée sur les articles secs à traiter avant dilution dans l'eau ;
* sous forme d'une dispersion ou d'une solution aqueuse à déposer directement sur les articles secs à traiter sans dilution ou d'un support solide comprenant ledit polysaccharide amphotère, à appliquer directement sur les articles secs à traiter ;
* ou sous forme d'un support solide insoluble comprenant ledit polysaccharide amphotère mis en contact directement avec les articles à traiter à l'état humide.

**29.** Procédé selon la revendication 27) ou 28), **caractérisé en ce que** la quantité dudit polysaccharide amphotère va de 0,05 à 10% en sec par rapport au poids de la composition de traitement exprimé en sec.

**30.** Procédé selon l'une quelconque des revendications 27) à 29), **caractérisé en ce que** ladite composition est une formulation détergente solide ou liquide comprenant de 0,05 à 5 % en poids dudit polysaccharide amphotère, composition susceptible de former directement par dilution un bain lessiviel.

**31.** Procédé selon l'une quelconque des revendications 27) à 29), **caractérisé en ce que** ladite composition est une formulation aqueuse liquide de rinçage et/ou d'adoucissage comprenant de 0,05 à 3 % en poids dudit polysaccharide amphotère, composition susceptible de former directement par dilution un bain de rinçage et/ou d'adoucissage.

**32.** Procédé selon l'une quelconque des revendications 27) à 29), **caractérisé en ce que** ladite composition est un additif de séchage sous forme d'un matériau solide, textile de préférence, comprenant de 0,05 à 10% en poids dudit polysaccharide amphotère, composition destinée à être mise en contact avec les articles textiles humides dans un sèche-linge.

**33.** Procédé selon l'une quelconque des revendications 27) à 29), **caractérisé en ce que** ladite composition est une formulation aqueuse liquide de repassage comprenant de 0,05 à 10 % en poids dudit polysaccharide amphotère.

**34.** Procédé selon l'une quelconque des revendications 27) à 29), **caractérisé en ce que** ladite composition est un additif de lavage comprenant de 0,05 à 10 % en poids dudit polysaccharide amphotère, destiné à être déposé sur les articles secs préalablement à une opération de lavage à l'aide d'une formulation détergente contenant ou ne contenant pas ledit polysaccharide amphotère.

**35.** Composition aqueuse liquide de rinçage et/ou d'adoucissage d'articles en fibres textiles comprenant de 0,05 à 3% de son poids du polysaccharide amphotère dont l'utilisation fait l'objet de l'une quelconque des revendications 1) à 19), composition susceptible de former directement par dilution un bain de rinçage et/ou d'adoucissage.

**36.** Additif de séchage d'articles en fibres textiles, sous forme d'un matériau solide, textile de préférence, comprenant de 0,05 à 10% de son poids du polysaccharide amphotère dont l'utilisation fait l'objet de l'une quelconque des revendications 1) à 19), additif destiné à être mise en contact avec les articles textiles humides dans un sèche-linge.

**37.** Composition aqueuse liquide de repassage d'articles en fibres textiles comprenant de 0,05 à 10 % de son poids du polysaccharide amphotère dont l'utilisation fait l'objet de l'une quelconque des revendications 1) à 19).

**38.** Additif de lavage d'articles en fibres textiles comprenant de 0,05 à 10% de son poids du polysaccharide amphotère dont l'utilisation fait l'objet de l'une quelconque des revendications 1) à 19), additif destiné à être déposé sur les articles secs préalablement à une opération de lavage à l'aide d'une formulation détergente contenant ou ne contenant pas ledit polysaccharide amphotère.

## Claims

**1.** The use, in a composition for treating articles made of textile fibers in aqueous or wet medium, of at least one amphoteric polysaccharide, the native skeleton of which is a polysaccharide formed from

* a main chain comprising similar or different anhydrohexose units, and
* branches comprising at least one neutral or anionic anhydropentose and/or anhydrohexose unit, the anhydrohexose and/or anhydropentose units of said amphoteric polysaccharide being substituted or modified with one or more groups bearing at least one anionic or potentially anionic charge and/or at least one cationic or potentially cationic charge,

the degree of substitution or of modification DSi of the anhydrohexose and/or anhydropentose units with all said groups bearing ionic or potentially ionic charges ranging from 0.01 to less than 3 and preferably from 0.05 to 2.5, with a ratio of the number of anionic or potentially anionic charges to the number of cationic or potentially cationic charges ranging from 99.5/0.5 to 30/70 and preferably from 99.5/0.5 to 50/50,
as an agent for preventing the degradation of said articles and/or for protecting the colors of said articles and/or for affording said articles crease-resistance and/or softening properties.

**2.** The use as claimed in claim 1, **characterized in that** the weight-average molar mass of said amphoteric polysaccharide ranges from 2000 to 3 000 000, preferably from 10 000 to 2 000 000 and most particularly from 10 000 to 500 000.

**3.** The use as claimed in claim 1 or 2, **characterized in that** the ionic or potentially ionic groups of said amphoteric polysaccharide are linked to the carbon atoms of the sugar skeleton either directly or via -O- bonds.

**4.** The use as claimed in one of claims 1 to 3, **characterized in that** the anionic or potentially anionic charges of said amphoteric polysaccharide are provided by substituent or modifying groups that are different than those bearing cationic or potentially cationic charges.

**5.** The use as claimed in one of claims 1 to 3, **characterized in that** the anionic or potentially anionic charges and the cationic or potentially cationic charges of said amphoteric polysaccharide are provided by the same betaine substituent or modifying group.

**6.** The use as claimed in one of claims 1 to 5, **characterized in that** said amphoteric polysaccharide also contains at least one nonionic group.

**7.** The use as claimed in claim 6, **characterized in that** said nonionic group of said amphoteric polysaccharide is linked to a carbon atom of the sugar skeleton either directly or via -O- bonds.

**8.** The use as claimed in claim 4, **characterized in that** the anionic or potentially anionic groups of said amphoteric polysaccharide are chosen from carboxylate (carboxylic), sulfonate (sulfonic), sulfate (hydrogen sulfate), phosphate (hydrogen phosphate) and phosphonate (hydrogen phosphonate) functions, or mixtures thereof.

**9.** The use as claimed in claim 8, **characterized in that** the anionic or potentially anionic groups of said amphoteric polysaccharide are chosen from those of formula

$$-[-CH_2-CH(R)-O]_x-(CH_2)_y-COOH$$

or

$$-[-CH_2-CH(R)-O]_x-(CH_2)_y-COOM$$

in which:

R is a hydrogen atom or an alkyl radical containing from 1 to 4 carbon atoms,
x is an integer ranging from 0 to 5,
y is an integer ranging from 0 to 5,
M represents an alkali metal.

**10.** The use as claimed in claim 4, **characterized in that** the cationic or potentially cationic groups of said amphoteric polysaccharide are chosen from those containing one or more amino, ammonium, phosphonium and pyridinium functions, or mixtures thereof.

**11.** The use as claimed in claim 10, **characterized in that** the cationic or potentially cationic groups of said amphoteric polysaccharide have the formula

• $-NH_2$
• $-[-CH_2-CH(R)-O]_x-(CH_2)_y-COA-R'-N(R'')_2$
• $-[-CH_2-CH(R)-O]_x-(CH_2)_y-COA-R'-N''(R'';)_3\ X^-$
• $-[-CH_2-CH(R)-O]_x-(CH_2)_y-COA-R'-NH-R''''-N(R'')_2$
• $-[-CH_2-CH(R)-O]_x-R'-N(R'')_2$
• $-[-CH_2-CH(R)-O]_x-R'-N^+(R''')_3\ X^-$
• $-[-CH_2-CH(R)-O]_x-R'-NH-R'''-N(R'')_2$
• $-[-CH_2-CH(R)-O]_x-Y-R''$

in which

.R is a hydrogen atom or an alkyl radical containing from 1 to 4 carbon atoms
· x is an integer ranging from 0 to 5
· y is an integer ranging from 0 to 5
. R' is an alkylene radical containing from 1 to 12 carbon atoms, optionally bearing one or more OH substituents
. the radicals R", which may be similar or different, represent a hydrogen atom or an alkyl radical containing from 1 to 18 carbon atoms
. the radicals R"', which may be similar or different, represent an alkyl radical containing from 1 to 18 carbon atoms
. R"" is a linear, branched or cyclic alkylene radical containing from 1 to 6 carbon atoms
. A represents O or NH
. Y is a heterocyclic aliphatic group containing from 5 to 20 carbon atoms and a nitrogen hetero atom
. $X^-$ is a counterion, preferably halide,

and also N-alkylpyridinium-yl groups in which the alkyl radical contains from 1 to 18 carbon atoms, with a counterion, preferably halide.

**12.** The use as claimed in claim 11, **characterized in that** the cationic or potentially cationic groups of said amphoteric polysaccharide are chosen from

- those of formula

$-NH_2$

$-CH_2-CONH-\ (CH_2)_2-N\ (CH_3)_2$

$-CH_2-COO-\ (CH_2)_2-NH-\ (CH_2)_2-N\ (CH_3)_2$

$-CH_2-CONH-(CH_2)_3-NH-(CH_2)_2N(CH_3)_2$

$-CH_2-CONH-\ (CH_2)_2-NH-\ (CH_2)_2-N(CH_3)_2$

$-CH_2-CONH-(CH_2)_2-N^+(CH_3)_3\ Cl^-$

$-CH_2-CONH-(CH_2)_3-N^+(CH_3)_3\ Cl^-$

$-(CH_2)_2-N(CH_3)_2$ $-(CH_2)_2-NH-(CH_2)_2-N(CH_3)_2$

$-(CH_2)_2-N^+(CH_3)_3\ Cl^-$

2-hydroxypropyltrimethylammonium chloride $-(CH_2)-CH(OH)-CH_2-N^+(CH_3)_3\ Cl^-$
- pyridinium-yl groups such as N-methyl pyridinium-yl, of formula

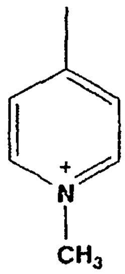

with a chloride counterion
- hindered amino groups such as those derived from HALS amines, of general formula:

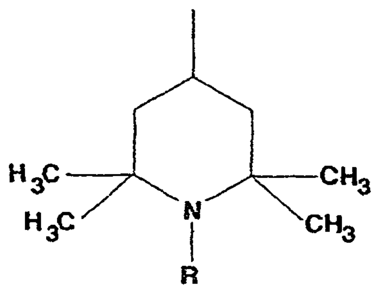

in which R represents $CH_3$ or H.

**13.** The use as claimed in claim 5, **characterized in that** the betaine ionic groups of said amphoteric polysaccharide are chosen from the functions of formula:

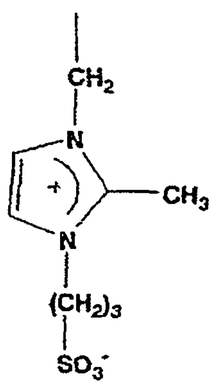

2-methyl(3-sulfopropyl)imidazolium function

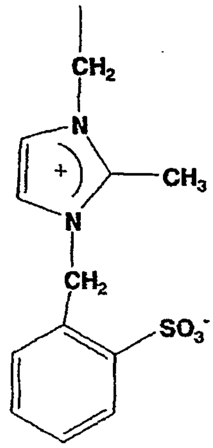

(2-sulfobenzyl)imidazolium function

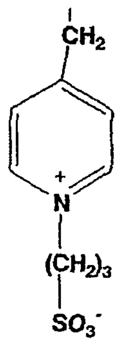

(3-sulfopropyl)pyridinium function

- $(CH_2)_2-N^+(CH_3)_2-(CH_2)_2-COO^-$ ethyl-dimethylammonium betaine function
- $(CH_2)_2-N^+(CH_3)_2-(CH_2)_3-SO_3^-$ sulfo-propyl dimethylammonium function.

**14.** The use as claimed in one of claims 1 to 13, **characterized in that** the nonionic groups of said amphoteric polysaccharide are chosen from those of formula:

• $-[-CH_2-CH(R)-O]_x-R^1$ in which:

R is a hydrogen atom or an alkyl radical containing from 1 to 4 carbon atoms,
x is an integer ranging from 0 to 5,
$R^1$ represents:

. a hydrogen atom
. an alkyl radical containing from 1 to 22 carbon atoms, optionally interrupted with one or more oxygen and/or nitrogen hetero atoms, cycloalkyl, aryl or arylalkyl, containing from 6 to 12 carbon atoms,
. a radical $-(CH_2)_y-COOR^2$
. a radical $-(CH_2)_y-CN$
. a radical $-(CH_2)_y-CONHR^2$

$R^2$ representing an alkyl, aryl or arylalkyl radical containing from 1 to 22 carbon atoms, and
y is an integer ranging from 0 to 5

• $-CO-NH-R^1$

$R^1$ having the definition given above, linked to a carbon atom of the sugar skeleton via an -O- bond.

**15.** The use as claimed in claim 14, **characterized in that** the nonionic groups of said amphoteric polysaccharide are chosen from the following groups

. methyl, ethyl, propyl, isopropyl, butyl, hexyl, octyl, dodecyl, octadecyl, phenyl, benzyl, linked to a carbon atom of the sugar skeleton via an ether, ester, amide or urethane bond,
. cyanoethyl, hydroxyethyl, hydroxypropyl, hydroxybutyl, linked to a carbon atom of the sugar skeleton via an -O- bond.

**16.** The use as claimed in one of claims 1 to 15, **characterized in that** the native skeleton of said amphoteric polysaccharide is chosen from galactomannans, galactoglucomannans, xyloglucans, xanthan gums, scleroglucans, succinoglycans, rhamsans and welan gums.

**17.** The use as claimed in claim 16, **characterized in that** the native skeleton of said amphoteric polysaccharide is a galactomannan.

**18.** The use as claimed in claimed 17, **characterized in that** the native skeleton of said amphoteric polysaccharide is a guar gum.

**19.** The use as claimed in one of claims 1 to 4, 6 to 12 and 14 to 18, **characterized in that** said amphoteric polysaccharide is chosen from

- carboxymethyl hydroxypropyltrimethylammonium chloride galactomannans, in particular carboxymethyl hydroxypropyltrimethylammonium chloride guars,
- carboxymethyl hydroxypropyl hydroxypropyltrimethylammonium chloride galactomannans, in particular carboxymethyl hydroxypropyl hydroxypropyltrimethylammonium chloride guars.

**20.** The use as claimed in any one of claims 1 to 19, **characterized in that** said composition for treating articles made of textile fibers in aqueous or wet medium is

* in the form of a solid or of a dispersion or of a concentrated aqueous solution placed in contact with the articles to be treated, after dilution in water;
* in the form of a dispersion or of a concentrated aqueous solution placed beforehand on the dry articles to be treated before dilution in water;
* in the form of a dispersion or of an aqueous solution to be placed directly on the dry articles to be treated without dilution or of a solid support comprising said amphoteric polysaccharide, to be applied directly to the dry articles to be treated; or
* in the form of an insoluble solid support comprising said amphoteric polysaccharide placed directly in contact with the wet articles to be treated.

**21.** The use as claimed in any one of claims 1 to 20, **characterized in that** the amount of said amphoteric polysaccharide ranges from 0.05% to 10% by weight relative to the weight of said composition expressed as solids.

**22.** The use as claimed in any one of claims 1 to 21, **characterized in that** said composition is a solid or liquid detergent formulation comprising from 0.05% to 5% by weight of said amphoteric polysaccharide, composition capable of directly forming a washing bath by dilution.

**23.** The use as claimed in any one of claims 1 to 21, **characterized in that** said composition is an aqueous liquid rinsing and/or softening formulation comprising from 0.05% to 3% by weight of said amphoteric polysaccharide, composition capable of directly forming a rinsing and/or softening bath by dilution.

**24.** The use as claimed in any one of claims 1 to 21, **characterized in that** said composition is a tumble dryer additive in the form of a solid material, preferably a textile material, comprising from 0.05% to 10% by weight of said amphoteric polysaccharide, composition intended to be placed in contact with the wet textile articles in a tumble dryer.

**25.** The use as claimed in any one of claims 1 to 21, **characterized in that** said composition is an aqueous liquid ironing formulation comprising from 0.05% to 10% by weight of said amphoteric polysaccharide.

**26.** The use as claimed in any one of claims 1 to 21, **characterized in that** said composition is a prespotter comprising from 0.05% to 10% by weight of said amphoteric polysaccharide, intended to the applied to the dry articles prior to a washing operation using a detergent formulation containing or not containing said amphoteric polysaccharide.

**27.** A process for improving the properties of compositions for treating or caring for articles made of textile fibers in aqueous or wet medium, by adding to said compositions at least one amphoteric polysaccharide, the use of which forms the subject of any one of claims 1 to 19, as an agent for preventing the degradation of said articles and/or for protecting the colors of said articles and/or for affording said articles crease-resistance and/or softening properties.

**28.** The process as claimed in claim 27, **characterized in that** the composition for treating or caring for articles made of textile fibers in aqueous or wet medium is chosen from those that are

* in the form of a solid or of a dispersion or of a concentrated aqueous solution placed in contact with the articles to be treated, after dilution in water;
* in the form of a dispersion or of a concentrated aqueous solution placed beforehand on the dry articles to be treated before dilution in water;
* in the form of a dispersion or of an aqueous solution to be placed directly on the dry articles to be treated without dilution or of a solid support comprising said amphoteric polysaccharide, to be applied directly to the dry articles to be treated; or
* in the form of an insoluble solid support comprising said amphoteric polysaccharide placed directly in contact with the wet articles to be treated.

**29.** The process as claimed in claim 27 or 28, **characterized in that** the amount of said amphoteric polysaccharide ranges from 0.05% to 10% solids relative to the weight of the treatment composition expressed as solids.

**30.** The process as claimed in any one of claims 27 to 29, **characterized in that** said composition is a solid or liquid detergent formulation comprising from 0.05% to 5% by weight of said amphoteric polysaccharide, composition capable of directly forming a washing bath by dilution.

**31.** The process as claimed in any one of claims 27 to 29, **characterized in that** said composition is an aqueous liquid rinsing and/or softening formulation comprising from 0.05% to 3% by weight of said amphoteric polysaccharide, composition capable of directly forming a rinsing and/or softening bath by dilution.

**32.** The process as claimed in any one of claims 27 to 29, **characterized in that** said composition is a tumble dryer additive in the form of a solid material, preferably a textile material, comprising from 0.05% to 10% by weight of said amphoteric polysaccharide, composition intended to be placed in contact with the wet textile articles in a tumble dryer.

**33.** The process as claimed in any one of claims 27 to 29, **characterized in that** said composition is an aqueous liquid ironing formulation comprising from 0.05% to 10% by weight of said amphoteric polysaccharide.

**34.** The process as claimed in any one of claims 27 to 29, **characterized in that** said composition is a prespotter comprising from 0.05% to 10% by weight of said amphoteric polysaccharide, intended to be applied to the dry articles prior to a washing operation using a detergent formulation containing or not containing said amphoteric polysaccharide.

**35.** An aqueous liquid rinsing and/or softening composition for articles made of textile fibers, comprising from 0.05% to 3% of its weight of the amphoteric polysaccharide, the use of which forms the subject of any one of claims 1 to 19, composition capable of directly forming a rinsing and/or softening bath by dilution.

**36.** A tumble dryer additive for articles made of textile fibers, in the form of a solid material, preferably a textile material, comprising from 0.05% to 10% of its weight of the amphoteric polysaccharide, the use of which forms the subject of any one of claims 1 to 19, additive intended to be placed in contact with the wet textile articles in a tumble dryer.

**37.** An aqueous liquid ironing composition for articles made of textile fibers, comprising from 0.05% to 10% of its weight of the amphoteric polysaccharide, the use of which forms the subject of any one of claims 1 to 19.

**38.** A prespotter for articles made of textile fibers, comprising from 0.05% to 10% of its weight of the amphoteric polysaccharide, the use of which forms the subject of any one of claims 1 to 19, additive intended to be placed on the dry

articles prior to a washing operation using a detergent formulation containing or not containing said amphoteric polysaccharide.

## Patentansprüche

1. Verwendung, in einer Zusammensetzung zur Behandlung von Gegenständen aus Textilfasern in wässrigem oder feuchtem Medium, von mindestens einem amphoteren Polysaccharid, dessen natives Gerüst ein Polysaccharid ist, welches gebildet wird:

    * aus einer Hauptkette, welche gleiche oder verschiedene Anhydrohexose-Einheiten umfasst,
    * und aus Verzweigungen, umfassend mindestens eine neutrale oder anionische Anhydropentose- und/oder Anhydrohexose-Einheit,

    wobei die Anhydrohexose- und/oder Anhydropentose-Einheiten des amphoteren Polysaccharids durch eine oder mehrere Gruppen, welche mindestens eine anionische oder potentiell anionische Ladung und/oder mindestens eine kationische oder potentiell kationische Ladung trägt bzw. tragen, substituiert oder modifiziert sind,
    wobei der Substitutions- oder Modifizierungsgrad DSi der Anhydrohexose- und/oder Anhydropentose-Einheiten durch die Gesamtheit der Gruppen, welche ionische oder potentiell ionische Ladungen tragen, von 0,01 bis weniger als 3, vorzugsweise von 0,05 bis 2,5 geht,
    mit einem Verhältnis der Anzahl von anionischen oder potentiell anionischen Ladungen zu der Anzahl von kationischen oder potentiell kationischen Ladungen, welches von 99,5/0,5 bis 30/70, vorzugsweise von 99,5/0,5 bis 50/50 geht,
    als Mittel, welches erlaubt, die Verschlechterung der Gegenstände zu vermeiden, und/oder erlaubt, die Farben der Gegenstände zu schützen, und/oder den Gegenständen knitterfreie oder Avivage-Eigenschaften verleiht.

2. Verwendung nach Anspruch 1, **dadurch gekennzeichnet, dass** die gewichtsbezogene Molmasse des amphoteren Polysaccharids von 2000 bis 3000000, vorzugsweise von 10000 bis 2000000, insbesondere von 10000 bis 500000 geht.

3. Verwendung nach Anspruch 1 oder 2, **dadurch gekennzeichnet, dass** die ionischen oder potentiell ionischen Gruppen des amphoteren Polysaccharids mit den Kohlenstoffatomen des Zuckergerüsts entweder direkt oder durch das Zwischenglied von Bindungen vom Typ -O- verknüpft sind.

4. Verwendung nach einem der Ansprüche 1 bis 3, **dadurch gekennzeichnet, dass** die anionischen oder potentiell anionischen Ladungen des amphoteren Polysaccharids von substituierenden oder modifizierenden Gruppen beigetragen werden, die von jenen, die kationische oder potentiell kationische Ladungen tragen, verschieden sind.

5. Verwendung nach einem der Ansprüche 1 bis 3, **dadurch gekennzeichnet, dass** die anionischen oder potentiell anionischen Ladungen und die kationischen oder potentiell kationischen Ladungen des amphoteren Polysaccharids durch ein und dieselbe substituierende oder modifizierende Betain-Gruppe beigetragen werden.

6. Verwendung nach einem der Ansprüche 1 bis 5, **dadurch gekennzeichnet, dass** das amphotere Polysaccharid außerdem mindestens eine nicht-ionische Gruppe aufweist.

7. Verwendung nach Anspruch 6, **dadurch gekennzeichnet, dass** die nicht-ionische Gruppe des amphoteren Polysaccharids mit einem Kohlenstoffatom des Zuckergerüsts entweder direkt oder durch das Zwischenglied von Bindungen vom Typ -O- verknüpft ist.

8. Verwendung nach Anspruch 4, **dadurch gekennzeichnet, dass** die anionischen oder potentiell anionischen Gruppen des amphoteren Polysaccharids unter den Carboxylat- (Carboxyl-), Sulfonat- (Sulfon-), Sulfat- (Hydrogensulfat-), Phosphat- (Hydrogenphosphat-), Phosphonat-(Hydrogenphosphonat) -funktionen oder deren Mischungen ausgewählt sind.

9. Verwendung nach Anspruch 8, **dadurch gekennzeichnet, dass** die anionischen oder potentiell anionischen Gruppen des amphoteren Polysaccharids ausgewählt sind unter jenen mit der Formel

    $-[CH_2-CH(R)-O]_x-(CH_2)_y-COOH$ oder

$-[-CH_2-CH(R)-O]_x-(CH_2)_y-COOM$,

worin
R ein Wasserstoffatom oder ein Alkylrest, enthaltend 1 bis 4 Kohlenstoffatome, ist,
x eine ganze Zahl, welche von 0 bis 5 geht, ist,
y eine ganze Zahl, welche von 0 bis 5 geht, ist,
M für ein Alkalimetall steht.

**10.** Verwendung nach Anspruch 4, **dadurch gekennzeichnet, dass** die kationischen oder potentiell kationischen Gruppen des amphoteren Polysaccharids unter jenen, welche eine oder mehrere Amino-, Ammonium-, Phosphonium-, Pyridiniumfunktionen oder deren Mischungen enthalten, ausgewählt sind.

**11.** Verwendung nach Anspruch 10, **dadurch gekennzeichnet, dass** die kationischen oder potentiell kationischen Gruppen des amphoteren Polysaccharids die Formel aufweisen

- $NH_2$
- $-[-CH_2-CH(R)-O]_x-(CH_2)_y-COA-R'-N(R'')_2$
- $-[-CH_2-CH(R)-O]_x(CH_2)_y-COA-R'-N^+(R''')_3X^-$
- $-[-CH_2-CH(R)-O]_x-(CH_2)_y-COA-R'-NH-R''''-N(R'')_2$
- $-[-CH_2-CH(R)-O]_xR'-N(R'')_2$
- $-[-CH_2-CH(R)-O]_x-R'-N^+(R''')_3X^-$
- $-[-CH_2-CH(R)-O]_x-R-NH-R''''-N(R'')_2$
- $-[-CH_2-CH(R)-O]_x-Y-R''$,

worin

. R ein Wasserstoffatom oder ein Alkylrest, enthaltend 1 bis 4 Kohlenstoffatome ist,
. x eine ganze Zahl, welche von 0 bis 5 geht, ist,
. y eine ganze Zahl, welche von 0 bis 5 geht, ist,
. R' ein Alkylenrest, enthaltend 1 bis 12 Kohlenstoffatome, welcher gegebenenfalls einen oder mehrere OH-Substituenten trägt, ist,
. die Reste R" die gleich oder verschieden sind, für ein Wasserstoffatom, einen Alkylrest, enthaltend 1 bis 18 Kohlenstoffatome, stehen,
. die Reste R"', die gleich oder verschieden sind, für einen Alkylrest, enthaltend 1 bis 18 Kohlenstoffatome, stehen,
. R"" ein linearer, verzweigter oder cyclischer Alkylenrest, enthaltend 1 bis 6 Kohlenstoffatome, ist,
. A für O oder NH steht,
. Y eine heterocyclische aliphatische Gruppe, umfassend 5 bis 20 Kohlenstoffatome und ein Stickstoff-Heteroatom, ist,
. $X^-$ ein Gegenion, vorzugsweise Halogenid, ist,
wie auch die N-Alkylpyridinium-yl-Gruppen, deren Alkylrest 1 bis 18 Kohlenstoffatome enthält, mit einem Gegenion, vorzugsweise Halogenid.

**12.** Verwendung nach Anspruch 11, **dadurch gekennzeichnet, dass** die kationischen oder potentiell kationischen Gruppen des amphoteren Polysaccharids ausgewählt sind unter

- jenen der Formel

$-NH_2$

$-CH_2-CONH-(CH_2)_2-N(CH_3)_2$

$-CH_2-COO-(CH_2)_2-NH-(CH_2)_2-N(CH_3)_2$

$-CH_2-CONH-(CH_2)_3-NH-(CH_2)_2-N(CH_3)_2$

$-CH_2-CONH-(CH_2)_2-NH-(CH_2)_2-N(CH_3)_2$

$-CH_2-CONH-(CH_2)_2-N^+(CH_3)_3Cl^-$

$-CH_2-CONH-(CH_2)_3-N^+(CH_3)_3Cl^-$

$-(CH_2)_2-N(CH_3)_2$

$-(CH_2)_2-NH-(CH_2)_2-N(CH_3)_2$

$-(CH_2)_2-N^+(CH_3)_3Cl^-$

2-Hydroxypropyltrimethytammoniumchlorid $-CH_2-CH(OH)-CH_2-N^+(CH_3)_3Cl^-$
- den Pyridinium-yl-Gruppen, wie N-Methylpyridinium-yl mit der Formel

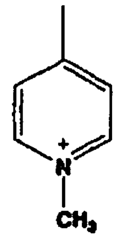

mit einem Chlorid-Gegenion
- den sterisch gehinderten Aminogruppen, vorzugsweise jenen, die von HALS-Aminen abgeleitet sind mit der allgemeinen Formel:

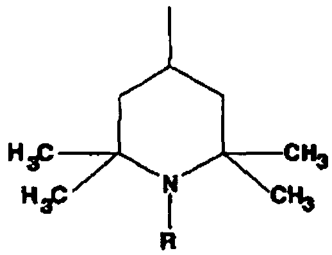

,

worin R für $CH_3$ oder H steht.

13. Verwendung nach Anspruch 5, **dadurch gekennzeichnet, dass** die ionischen Betain-Gruppen des amphoteren Polysaccharids ausgewählt sind unter den Funktionen mit der Formel:

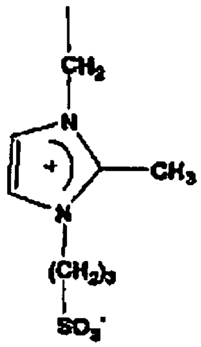

2-Methyl-(3-sulfopropyl)imidazolium-Funktion

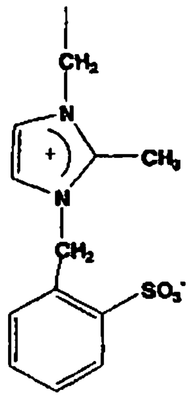

(2-Sulfobenzyl)imidazolium-Funktion

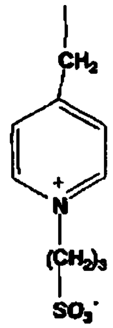

(3-Sulfopropyl)pyridinium-Funktion

- $(CH_2)_2$-$N^+(CH_3)_2$-$(CH_2)_2$- $COO^-$ Ethyldimethylammoniumbetain-Funktion
- $(CH_2)_2$-$N^+(CH_3)_2$-$(CH_2)_3$- $SO_3^-$ Sulfopropyldimethylammoniumfunktion.

**14.** Verwendung nach einem der Ansprüche 1 bis 13, **dadurch gekennzeichnet, dass** die nicht-ionischen Gruppen des amphoteren Polysaccharids ausgewählt sind unter jenen mit der Formel:

• $-[-CH_2-CH(R)-O]_x-R^1$, worin
R ein Wasserstoffatom oder ein Alkylrest, enthaltend 1 bis 4 Kohlenstoffatome, ist,
x eine ganze Zahl, welche von 0 bis 5 geht, ist,
$R^1$ für

. ein Wasserstoffatom
. einen Alkylrest, enthaltend 1 bis 22 Kohlenstoffatome, gegebenenfalls unterbrochen durch ein oder mehrere Sauerstoff- und/oder Stickstoff-Heteroatome, Cycloalkyl, Aryl, Arylalkyl, enthaltend 6 bis 12 Kohlenstoffatome,
. einen Rest $-(CH_2)_y-COOR^2$
. einen Rest $-(CH_2)_y-CN$
. einen Rest $-(CH_2)_y-CONHR^2$

steht,
wobei $R^2$ für einen Alkyl-, Aryl- oder Arylalkylrest, enthaltend 1 bis 22 Kohlenstoffatome, steht und y eine ganze Zahl, welche von 0 bis 5 geht, ist,
• $-CO-NH-R^1$,

worin $R^1$ die vorstehend angegebene Definition aufweist,

gebunden an ein Kohlenstoffatom des Zuckergerüsts durch das Zwischenglied einer Bindung vom Typ -O-.

**15.** Verwendung nach Anspruch 14, **dadurch gekennzeichnet, dass** die nicht-ionischen Gruppen des amphoteren Polysaccharids ausgewählt sind unter den folgenden Gruppen

. Methyl, Ethyl, Propyl, Isopropyl, Butyl, Hexyl, Octyl, Dodecyl, Octadecyl, Phenyl, Benzyl, die an ein Kohlenstoffatom des Zuckergerüsts durch das Zwischenglied einer Ether-, Ester-, Amid- oder Urethan-Bindung gebunden sind,
. Cyanethyl, Hydroxyethyl, Hydroxypropyl, Hydroxybutyl, die an ein Kohlenstoffatom des Zuckergerüsts durch das Zwischenglied einer Bindung vom Typ -O- gebunden sind.

**16.** Verwendung nach einem der Ansprüche 1 bis 15, **dadurch gekennzeichnet, dass** das native Gerüst des amphoteren Polysaccharids unter den Galactomannanen, den Galactoglucomannanen, den Xyloglucanen, den Xanthangummis, den Skleroglucanen, den Succinoglycanen, den Rhamsanen, den Welangummis ausgewählt ist.

**17.** Verwendung nach Anspruch 16, **dadurch gekennzeichnet, dass** das native Gerüst des amphoteren Polysaccharids ein Galactomannan ist.

**18.** Verwendung nach Anspruch 17, **dadurch gekennzeichnet, dass** das native Gerüst des amphoteren Polysaccharids ein Guar Gum ist.

**19.** Verwendung nach einem der Ansprüche 1 bis 4, 6 bis 12 und 14 bis 18, **dadurch gekennzeichnet, dass** das amphotere Polysaccharid ausgewählt ist unter

- den Carboxymethylgalactomannan-Hydroxypropyltrimethylammoniumchloriden, insbesondere den Carboxymethylguar-Hydroxypropyltrimethylammoniumchloriden,
- den Carboxymethyl-hydroxypropyl-galactomannan-Hydroxypropyltrimethylammoniumchloriden, insbesondere den Carboxymethylhydroxypropylguar-Hydroxypropyltrimethylammoniumchloriden.

**20.** Verwendung nach einem der Ansprüche 1 bis 19, **dadurch gekennzeichnet, dass** die Zusammensetzung für die Behandlung von Gegenständen aus Textilfasern in wässrigem oder feuchtem Medium vorliegt

* in Form eines Feststoffs oder einer Dispersion oder einer konzentrierten wässrigen Lösung, der bzw. die mit den zu behandelnden Gegenständen nach Verdünnung in Wasser in Kontakt gebracht wird;
* in Form einer Dispersion oder einer konzentrierten wässrigen Lösung, die vor einer Verdünnung in Wasser vorab auf die trockenen, zu behandelnden Gegenstände aufgetragen wird;
* in Form einer Dispersion oder einer wässrigen Lösung zum direkten Auftragen auf die trockenen, zu behandelnden Gegenstände ohne Verdünnung oder eines festen Trägers, umfassend das amphotere Polysaccharid, zum direkten Auftragen auf die trockenen, zu behandelnden Gegenstände;
* oder in Form eines unlöslichen festen Trägers, umfassend das amphotere Polysaccharid, der direkt mit den zu behandelnden Gegenständen in feuchtem Zustand in Kontakt gebracht wird.

**21.** Verwendung nach einem der Ansprüche 1 bis 20, **dadurch gekennzeichnet, dass** die Menge des amphoteren Polysaccharids von 0,05 bis 10% als Trockensubstanz bezogen auf das Gewicht der Zusammensetzung, ausgedrückt als Trockensubstanz, geht.

**22.** Verwendung nach einem der Ansprüche 1 bis 21, **dadurch gekennzeichnet, dass** die Zusammensetzung eine feste oder flüssige Waschmittelformulierung, umfassend 0,05 bis 5 Gew.% des amphoteren Polysaccharids, ist, wobei die Zusammensetzung in der Lage ist, direkt durch Verdünnung ein Waschlaugenbad zu bilden.

**23.** Verwendung nach einem der Ansprüche 1 bis 21, **dadurch gekennzeichnet, dass** die Zusammensetzung eine flüssige wässrige Spül- und/oder Avivageformulierung, umfassend 0,05 bis 3 Gew.-% des amphoteren Polysaccharids, ist, wobei die Zusammensetzung in der Lage ist, direkt durch Verdünnung ein Spül- und/oder Avivagebad zu bilden.

**24.** Verwendung nach einem der Ansprüche 1 bis 21, **dadurch gekennzeichnet, dass** die Zusammensetzung ein Trocknungszusatz in Form eines festen Materials, vorzugsweise Textilmaterials, umfassend 0,05 bis 10 Gew.-% des amphoteren Polysaccharids, ist, welche Zusammensetzung dazu bestimmt ist, mit den feuchten Textilgegenständen in einem Wäschetrockner in Kontakt gebracht zu werden.

**25.** Verwendung nach einem der Ansprüche 1 bis 21, **dadurch gekennzeichnet, dass** die Zusammensetzung eine flüssige wässrige Bügelformulierung, umfassend 0,05 bis 10 Gew.-% des amphoteren Polysaccharids, ist.

**26.** Verwendung nach einem der Ansprüche 1 bis 21, **dadurch gekennzeichnet, dass** die Zusammensetzung ein Waschzusatz, umfassend 0,05 bis 10 Gew.-% des amphoteren Polysaccharids, ist, welcher dazu bestimmt ist, auf die trockenen Gegenstände vor einem Waschvorgang mit Hilfe einer Waschmittelformulierung, welche das amphotere Polysaccharid enthält oder nicht enthält, aufgetragen zu werden.

**27.** Verfahren zum Verbessern der Eigenschaften von Zusammensetzungen für die Behandlung oder die Pflege von Gegenständen aus Textilfasern in wässrigem oder feuchtem Medium durch Zugabe von mindestens einem amphoteren Polysaccharid, dessen Verwendung den Gegenstand von irgendeinem der Ansprüche 1 bis 19 bildet, zu den Zusammensetzungen als ein Mittel, welches erlaubt, die Verschlechterung der Gegenstände zu vermeiden, und/oder erlaubt, die Farben der Gegenstände zu schützen, und/oder den Gegenständen knitterfreie oder Avivage-Eigenschaften verleiht.

**28.** Verfahren nach Anspruch 27, **dadurch gekennzeichnet, dass** die Zusammensetzung für die Behandlung oder die Pflege der Gegenstände aus Textilfasern in wässrigem oder feuchtem Medium ausgewählt ist unter jenen, die vorliegen:

* in Form eines Feststoffs oder einer Dispersion oder einer konzentrierten wässrigen Lösung, der bzw. die mit den zu behandelnden Gegenständen nach Verdünnung in Wasser in Kontakt gebracht wird;
* in Form einer Dispersion oder einer konzentrierten wässrigen Lösung, die vor einer Verdünnung in Wasser vorab auf die trockenen, zu behandelnden Gegenstände aufgetragen wird;
* in Form einer Dispersion oder einer wässrigen Lösung zum direkten Auftragen auf die trockenen, zu behandelnden Gegenstände ohne Verdünnung oder eines festen Trägers, umfassend das amphotere Polysaccharid, zum direkten Auftragen auf die trockenen, zu behandelnden Gegenstände;
* oder in Form eines unlöslichen festen Trägers, umfassend das amphotere Polysaccharid, der direkt mit den zu behandelnden Gegenständen in feuchtem Zustand in Kontakt gebracht wird.

**29.** Verfahren nach Anspruch 27 oder 28, **dadurch gekennzeichnet, dass** die Menge des amphoteren Polysaccharids von 0,05 bis 10% als Trockensubstanz bezogen auf das Gewicht der Behandlungszusammensetzung, ausgedrückt als Trockensubstanz, geht.

**30.** Verfahren nach einem der Ansprüche 27 bis 29, **dadurch gekennzeichnet, dass** die Zusammensetzung eine feste oder flüssige Waschmittelformulierung, umfassend 0,05 bis 5 Gew.% des amphoteren Polysaccharids, ist, wobei die Zusammensetzung in der Lage ist, direkt durch Verdünnung ein Waschlaugenbad zu bilden.

**31.** Verfahren nach einem der Ansprüche 27 bis 29, **dadurch gekennzeichnet, dass** die Zusammensetzung eine flüssige wässrige Spül- und/oder Avivageformulierung, umfassend 0,05 bis 3 Gew.-% des amphoteren Polysaccharids, ist, wobei die Zusammensetzung in der Lage ist, direkt durch Verdünnung ein Spül- und/oder Avivagebad zu bilden.

**32.** Verfahren nach einem der Ansprüche 27 bis 29, **dadurch gekennzeichnet, dass** die Zusammensetzung ein Trocknungszusatz in Form eines festen Materials, vorzugsweise Textilmaterials, umfassend 0,05 bis 10 Gew.-% des amphoteren Polysaccharids, ist, welche Zusammensetzung dazu bestimmt ist, mit den feuchten Textilgegenständen in einem Wäschetrockner in Kontakt gebracht zu werden.

**33.** Verfahren nach einem der Ansprüche 27 bis 29, **dadurch gekennzeichnet, dass** die Zusammensetzung eine flüssige wässrige Bügelformulierung, umfassend 0,05 bis 10 Gew.-% des amphoteren Polysaccharids, ist.

**34.** Verfahren nach einem der Ansprüche 27 bis 29, **dadurch gekennzeichnet, dass** die Zusammensetzung ein Waschzusatz, umfassend 0,05 bis 10 Gew.-% des amphoteren Polysaccharids ist, welcher dazu bestimmt ist, auf die trockenen Gegenstände vor einem Waschvorgang mit Hilfe einer Waschmittelformulierung, welche das amphotere Polysaccharid enthält oder nicht enthält, aufgetragen zu werden.

**35.** Flüssige, wässrige Spül- und/oder Avivagezusammensetzung für Gegenstände aus Textilfasern, umfassend 0,05

bis 3% von ihrem Gewicht von dem amphoteren Polysaccharid, dessen Verwendung den Gegenstand von irgendeinem der Ansprüche 1 bis 19 bildet, welche Zusammensetzung in der Lage ist, direkt durch Verdünnung ein Spül- und/oder Avivagebad zu bilden.

**36.** Trocknungszusatz für Gegenstände aus Textilfasern in Form eines festen Materials, vorzugsweise Textilmaterials, umfassend 0,05 bis 10% von seinem Gewicht von dem amphoteren Polysaccharid, dessen Verwendung den Gegenstand von irgendeinem der Ansprüche 1 bis 19 bildet, welcher Zusatz dazu bestimmt ist, mit den feuchten Textilgegenständen in einem Wäschetrockner in Kontakt gebracht zu werden.

**37.** Flüssige wässrige Bügelzusammensetzung für Gegenstände aus Textilfasern, umfassend 0,05 bis 10 Gew.-% von ihrem Gewicht von dem amphoteren Polysaccharid, dessen Verwendung den Gegenstand von irgendeinem der Ansprüche 1 bis 19 bildet.

**38.** Waschzusatz für Gegenstände aus Textilfasern, umfassend 0,05 bis 10 Gew.-% von seinem Gewicht von dem amphoteren Polysaccharid, dessen Verwendung den Gegenstand von irgendeinem der Ansprüche 1 bis 19 bildet, welcher Zusatz dazu bestimmt ist, auf die trockenen Gegenstände vor einem Waschvorgang mit Hilfe einer Waschmittelformulierung, welche das amphotere Polysaccharid enthält oder nicht enthält, aufgetragen zu werden.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4585563 A
- WO 9207927 A
- WO 9839401 A
- GB 1082179 A
- US 4565647 A
- US 4664839 A
- EP 488868 A
- EP 219048 A
- US 3959230 A
- US 3893929 A
- US 4116896 A
- US 4702857 A
- US 4770666 A
- US 4968451 A
- US 4711730 A
- US 4721580 A
- US 4877896 A
- FR 2720399 A
- US 4597898 A
- EP 11984 A
- FR 2236926 A
- US 3308067 A
- EP 66915 A
- US 3553139 A
- US 4101457 A
- US 4507219 A
- US 4261868 A

### Littérature non-brevet citée dans la description

- **M. ZAHRADNIK.** The production and application of fluorescent brightening agents. John Wiley & Sons, 1982